# EUROPEAN PATENT SPECIFICATION

(11) **EP 2 902 462 B1**
(45) Date of publication and mention of the grant of the patent: **11.01.2017**
(21) Application number: 13841039.4
(22) Date of filing: 12.09.2013
(51) Int. Cl.: C09K 3/10, C03C 27/06, E04B 1/682, E06B 3/54, E06B 7/16, E06B 3/66, B32B 17/10

(54) **STRUCTURAL BODY**
STRUKTURKÖRPER
CORPS STRUCTURAL

(30) Priority: 28.09.2012 JP 2012217304
(43) Date of publication of application: 05.08.2015
(73) Proprietor: Kaneka Corporation, Kita-ku, Osaka 530-8288 (JP)
(72) Inventor: OKAMOTO, Toshihiko, Takasago-shi Hyogo 676-8688 (JP)
(74) Representative: Hart-Davis, Jason
(86) International application number: PCT/JP2013/074692
(87) International publication number: WO 2014/050592

(56) References cited:
- EP-A1- 2 527 406
- WO-A1-2009/013308
- WO-A1-2011/089878
- JP-A- 2003 327 856
- JP-A- 2003 327 856
- JP-A- 2005 281 073
- JP-A- 2005 281 073
- JP-A- 2005 281 493
- JP-A- 2005 281 493
- JP-A- 2010 534 260
- JP-A- 2011 190 394
- JP-A- 2011 190 394

## Description

### TECHNICAL FIELD

The present invention relates to a structure that includes a joint at least partially formed by a light-transmitting member, and a cured product of a curable composition filling the joint.

### BACKGROUND ART

Organic polymers containing at least one reactive silyl group in the molecule by nature are known to be cross-linked by siloxane bond formation, which involves the hydrolysis or other reactions of the reactive silyl group due to moisture or other factors even at room temperature, to thereby form rubbery cured products.

Among such reactive silyl group-containing polymers, organic polymers having a polyoxyalkylene polymer backbone or a (meth) acrylate polymer backbone are disclosed in, for example, Patent Literature 1 and Patent Literature 2. Such organic polymers have already been industrially produced and are widely used for sealants, adhesives, coatings, and other applications. In particular, curable compositions containing a reactive silyl group-containing (meth)acrylate polymer are excellent in weather resistance, heat resistance, adhesion, and the like.

Sealants are usually used to provide water tightness or airtightness by filling connections, gaps, or joints between members. Thus, among the properties required of sealants, long-term adhesion to applied portions is very important.

Generally, sealants and adhesives are often used outside while being exposed to sunlight, wind, or rain, and attention needs to be paid to weather resistance of sealants. This is because polymers contained in sealants are usually degraded gradually during long-term exposure to light, heat, water, or other exogenous factors including mechanical, electrical, chemical, and microbial factors (Non Patent Literature 1). Since the influence of light is great among these exogenous factors, curable compositions for use in joints, which are formed by light-transmitting members such as glass, are especially required to have weather-resistant adhesion.

One example of a structure including a joint formed by light-transmitting members, and a cured product of a curable composition filling the joint is insulating glass. In general, insulating glass is produced by disposing at least two glass plates to face each other, with a spacer being interposed therebetween, bonding the glass plates and the spacer with a butyl sealant (primary sealant) to insulate the hollow layer from outside air, and then sealing the gap formed by the inner faces of the opposing glass plates and the outer periphery of the spacer, with a polysulfide (PS)-, polyurethane (PU)-, or silicone (SR)-based room temperature curable sealant (secondary sealant). The method using two types of sealants is a widely used method called dual seal construction.

Patent Literature 3, Patent Literature 4, Patent Literature 5, Patent Literature 6, and Patent Literature 7 disclose the use of (meth) acrylate polymers as mentioned above for insulating glass sealants. The use of the sealants specifically described in these references unfortunately failed to provide sufficient weather-resistant adhesion in some cases. Moreover, Patent Literature 6 reports excellent weather-resistant adhesion of a structure which includes a light-transmitting member and a curable composition containing a reactive silyl group-containing vinyl polymer and a benzophenone compound. This structure, however, still needs some improvements.

Also, Patent Literature 8, Patent Literature 9, and Patent Literature 10 disclose methods of producing a cured product with low modulus and high elongation by using a combination of a (meth)acrylate polymer containing a large number of reactive silyl groups per molecule and a (meth)acrylate polymer containing a small number of reactive silyl groups per molecule. However, these literatures do not describe the effect of the combination of a (meth)acrylate polymer containing a large number of reactive silyl groups and a (meth) acrylate polymer containing a small number of reactive silyl groups on weather-resistant adhesion.

### CITATION LIST

### PATENT LITERATURE

Patent Literature 1: JP-A S55-9669
Patent Literature 2: JP-A H01-198673
Patent Literature 3: JP-A 2005-281073
Patent Literature 4: WO 09/013308
Patent Literature 5: JP-A 2010-111870
Patent Literature 6: JP-A 2011-190394
Patent Literature 7: WO 2005/075562
Patent Literature 8: JP-A 2011-236363
Patent Literature 9: JP-A 2007-182590
Patent Literature 10: JP-A 2004-107393

### NON PATENT LITERATURE

Non Patent Literature 1: "Köbunshi no hikari anteika gijutsu" (Approach for photo-stabilization of polymers), Zenjiro Osawa, CMC publishing Co., Ltd, 1986

### SUMMARY OF INVENTION

### TECHNICAL PROBLEM

The present invention aims to provide a structure that includes a light-transmitting member, a joint formed by the member, and a cured product of a curable composition filling the joint, wherein the curable composition has excellent weather-resistant adhesion.

### SOLUTION TO PROBLEM

As a result of intensive investigation to solve the above problem, the inventor of the present application has found out that the problem can be solved by use of a curable composition that contains the following components (A), (B), (D), (E), and (F) : (A) a (meth) acrylate polymer having a high number-average molecular weight and containing a large number of reactive silyl groups per molecule; (B) a (meth) acrylate polymer having a low number-average molecular weight and containing a small number of reactive silyl groups per molecule; (D) a silanol condensation catalyst; (E) a silane coupling agent; and (F) an inorganic filler, wherein the ratio of a sum of the weight "a" of the component (A) and the weight "b" of the component (B) to the total weight "x" of the curable composition excluding the component (F), (a + b)/x, falls within a specific range. Accordingly, the inventor completed the present invention.

The present invention relates to a structure that includes a joint formed between members at least one of which is a light-transmitting member (I), and a cured product (II) of a curable composition filling the joint, wherein the cured product (II) of a curable composition filling the joint contains the following components (A), (B), (D), (E), and (F):
(A) a (meth)acrylate polymer having a number-average molecular weight of at least 8000 but not more than 50000 and containing per molecule on average 1.0 to 3.5 silyl groups capable of crosslinking through formation of a siloxane bond;
(B) a (meth)acrylate polymer having a number-average molecular weight of at least 1000 but less than 8000 and containing per molecule on average 0.5 to 1.5 silyl groups capable of crosslinking through formation of a siloxane bond;
(D) a silanol condensation catalyst;
(E) a silane coupling agent; and
(F) an inorganic filler,
wherein a ratio of a sum of a weight "a" of the component (A) and a weight "b" of the component (B) to a total weight "x" of the curable composition excluding the component (F), (a + b)/x, is 60 to 99% by weight.

That is, the present invention relates to a structure, including:
a light-transmitting member,
a joint formed by the member, and
a cured product of a curable composition filling the joint,
the curable composition containing the following components (A), (B), (D), (E), and (F):
   (A) a (meth)acrylate polymer having a number-average molecular weight of at least 8000 but not more than 50000 and containing per molecule on average 1.0 to 3.5 silyl groups capable of crosslinking through formation of a siloxane bond;
   (B) a (meth)acrylate polymer having a number-average molecular weight of at least 1000 but less than 8000 and containing per molecule on average 0.5 to 1.5 silyl groups capable of forming a siloxane bond;
   (D) a silanol condensation catalyst;
   (E) a silane coupling agent; and
   (F) an inorganic filler,
a ratio of a sum of a weight "a" of the component (A) and a weight "b" of the component (B) to a total weight "x" of the curable composition excluding the component (F), (a + b)/x, being 60 to 99% by weight.

The light-transmitting member is preferably glass.

The curable composition preferably further contains a component (C): a polyoxyalkylene polymer containing a silyl group capable of crosslinking through formation of a siloxane bond.

The component (C) preferably has a polypropylene oxide backbone skeleton.

A ratio of a sum of the weight "a" of the component (A), the weight "b" of the component (B), and a weight "c" of the component (C) to the total weight "x" of the curable composition excluding the component (F), (a + b + c)/x, is preferably 70 to 99% by weight.

The silyl group in the component (A) and/or the silyl group in the component (B) is preferably a group represented by the formula (1):

-SiR¹₃₋ₐXₐ (1)

wherein the (3-a) R¹s each independently represent a C1-C20 alkyl group, a C3-C8 cycloalkyl group, a C6-C20 aryl group, a C7-C20 aralkyl group, or a triorganosiloxy group represented by (R')₃SiO- wherein the R's each independently represent a C1-C20 substituted or unsubstituted hydrocarbon group; the a Xs each independently represent a hydroxy group or a hydrolyzable group; and a is 1, 2, or 3.

The silyl group in the component (A) is preferably a silyl group of the formula (1) wherein a is 2.

The silyl group in the component (B) is preferably a silyl group of the formula (1) wherein a is 3.

The component (A) and/or the component (B) is preferably a (meth) acrylate polymer containing at least 10% by weight of an acrylate monomer unit.

The component (A) and/or the component (B) is preferably a (meth) acrylate polymer containing at least 10% by weight of butyl acrylate monomer unit.

Preferably, the silyl group in the component (A) and/or the silyl group in the component (B) is present at an end of a side chain of the corresponding (meth)acrylate polymer.

A ratio (a/b) between the weight "a" of the component (A) and the weight "b" of the component (B) is preferably 1/2 to 4/1.

The curable composition preferably contains the component (D) in an amount of 0.01 to 5 parts by weight per 100 parts by weight in total of the component (A) and the component (B).

The curable composition preferably contains the component (E) in an amount of 0.1 to 20 parts by weight per 100 parts by weight in total of the component (A) and the component (B).

The curable composition preferably contains the component (F) in an amount of 10 to 500 parts by weight per 100 parts by weight in total of the component (A) and the component (B).

Preferably, an amount of plasticizer is less than 30 parts by weight per 100 parts by weight in total of the component (A) and the component (B).

Preferably, an amount of solvent is less than 1 part by weight per 100 parts by weight in total of the component (A) and the component (B).

The component (A) and/or the component (B) is preferably a polymer obtained by solution polymerization.

The component (A) and/or the component (B) is preferably a polymer obtained by polymerization of a monomer mixture containing a (meth) acrylate monomer containing the silyl group of the formula (1).

### ADVANTAGEOUS EFFECTS OF INVENTION

The structure of the present invention includes a cured product that is less likely to be degraded by light, maintains adhesion over a long period of time even when exposed to very harsh environments, and has excellent weather-resistant adhesion to light-transmitting members. Such a structure thus can maintain excellent waterproofness and airtightness over a long period of time.

### DESCRIPTION OF EMBODIMENTS

The present invention will be described in detail below. As used herein, the silyl group (or silicon-containing group) capable of forming a siloxane bond is also referred to as "reactive silyl group". Reactive silyl groups contain a hydroxy group or hydrolyzable group bonded to a silicon atom.

The present invention relates to a structure including:
a light-transmitting member, a joint formed by the member, and a cured product of a curable composition filling the joint,
the curable composition containing the following components (A), (B), (D), (E), and (F):
   (A) a (meth)acrylate polymer having a number-average molecular weight of at least 8000 but not more than 50000 and containing per molecule on average 1.0 to 3.5 silyl groups capable of crosslinking through formation of a siloxane bond;
   (B) a (meth)acrylate polymer having a number-average molecular weight of at least 1000 but less than 8000 and containing per molecule on average 0.5 to 1.5 silyl groups capable of forming a siloxane bond;
   (D) a silanol condensation catalyst;
   (E) a silane coupling agent; and
   (F) an inorganic filler,
the ratio of a sum of the weight "a" of the component (A) and the weight "b" of the component (B) to the total weight "x" of the curable composition excluding the component (F), (a + b)/x, being 60 to 99% by weight.

### <Light-transmitting member (I)>

In the present invention, the joint is formed between members at least one of which is a light-transmitting member (I). The curable composition used in the present invention is especially effective when an adherend is a transparent material.

The light-transmitting member as used herein may be any material that transmit light, including not only transparent materials but also semitransparent ones having less transparency, ones having fine irregularities on the surfaces, and ones that are not transparent due to corrosion with hydrofluoric acid but still transmit light. Also, the member includes materials (substrates) that include a transparent material as a part of the structure thereof, such as mirrors prepared by applying amalgam to the back of glass plates. Examples of the light-transmitting member include, but are not limited to, building materials of glass or synthetic resins such as polycarbonates, poly(meth)acrylates (e.g. polymethyl methacrylate), polystyrenes, and polyvinyl chlorides. Glass is especially preferred among these.

The glass is not particularly limited. Preferred examples of the glass include float glass, polished glass, figured glass, wire glass, wired glass, heat ray absorbing glass, heat ray reflecting glass, tempered glass, double tempered glass, laminated glass, insulating glass, vacuum insulating glass, high heat insulating glass, fireproof glass, electromagnetic wave shielding glass, and other functional glasses.

The light-transmitting member may be provided with a surface having a layer with anti-stain properties. The anti-stain properties as used herein include a function of decomposing organic compounds due to photocatalytic properties and a function of removing stains with rainwater due to hydrophilic properties.

The layer with anti-stain properties due to photocatalytic properties (hereinafter, also referred to as photocatalytic layer) is not particularly limited as long as it contains a material with photocatalytic properties. Examples of the material with photocatalytic properties include photocatalysts and silicate coats. Examples of photocatalysts include, but are not limited to, TiO₂, SrTiO₃, ZnO, CdS, and SnO₂, preferably TiO_{2.}

The layer with anti-stain properties due to hydrophilic properties is not particularly limited as long as it contains a hydrophilic material. Examples of the hydrophilic material include silica.

The photocatalytic layer may further contain a hydrophilic material in addition to the material with photocatalytic properties. Preferred examples of such a photocatalytic layer include layers containing both TiO₂ and silica.

The layer with anti-stain properties may also be, for example, a layer obtained by coating a surface of the member with a composition containing anatase titanium oxide having photocatalytic activity. When the member is exposed to sunlight, such a layer provides the surface of the member with both a capability of decomposing organic compounds and superhydrophilic properties. Thus, owing to the capability of decomposing organic compounds, the light-transmitting member has an effect of decomposing organic stains attached to its surface and, owing to the superhydrophilic properties, it also has an effect of washing away organic or inorganic stains on the surface.

The photocatalytic layer is usually formed from fine particles of the material with photocatalytic properties. The fine particles preferably have a particle size of 0.005 to 1 µm, particularly preferably 0.01 to 0.3 µm.

The layer with anti-stain properties preferably has a thickness of 0.01 to 10 µm.

The layer with anti-stain properties may be formed on the light-transmitting member by immersion, sputtering, thermal spraying, spraying or the like using a solution, dispersion or the like which contains a material with photocatalytic properties or a hydrophilic material.

Specific examples of the light-transmitting member provided with a surface having the layer with anti-stain properties due to photocatalytic properties include, but are not limited to, commercially available glass materials having these properties, such as BIO CLEAN (available from Saint-Gobain), ACTIVE GLASS (available from Pilkington), SUNCLEAN (available from PPG), HYDROTECT (available from TOTO), and CLEARTECT (available from Nippon Sheet Glass Co., Ltd.).

### <Cured product (II)>

The cured product (II) used in the present invention is obtained by filling a joint, which is at least partially formed by the above-described member (I), with a curable composition described below, and then curing the curable composition.

### <Curable composition>

The curable composition used in the present invention contains a polymer component that includes a (meth)acrylate polymer (A) having a number-average molecular weight of at least 8000 but not more than 50000 and containing per molecule on average 1.0 to 3. 5 reactive silyl groups, and a (meth) acrylate polymer (B) having a number-average molecular weight of at least 1000 but less than 8000 and containing per molecule on average 0.5 to 1.5 reactive silyl groups.

### «(Meth)acrylate polymer (A)>>

In the present invention, a (meth)acrylate polymer (A) having a number-average molecular weight of at least 8000 but not more than 50000 and containing per molecule on average 1.0 to 3.5 reactive silyl groups is used as an essential component.

The number-average molecular weight of the component (A) needs to be at least 8000 but not more than 50000 as measured by gel permeation chromatography (GPC) relative to polystyrene standards. The number-average molecular weight is more preferably at least 10000 but not more than 30000, still more preferably at least 12000 but not more than 25000, and particularly preferably at least 15000 but not more than 20000. If the component (A) has a number-average molecular weight of less than 8000, the resulting cured product may have reduced elongation properties, while if the component (A) has a number-average molecular weight of more than 50000, the curable composition may have a high viscosity and poor workability.

The component (A) needs to contain per molecule on average 1.0 to 3. 5 reactive silyl groups, preferably 1.2 to 3. 0 reactive silyl groups, more preferably 1.4 to 2.5 reactive silyl groups, still more preferably 1.5 to 2.3 reactive silyl groups, and particularly preferably 1.6 to 2.0 reactive silyl groups. If the component (A) contains less than 1.0 reactive silyl group, curability may be reduced so that good rubber elastic behavior, initial adhesion, and weather-resistant adhesion are less likely to be provided. Conversely, if the component (A) contains more than 3.5 reactive silyl groups, the resulting cured product may become hard and have reduced elongation properties.

In view of elongation properties, the reactive silyl group in the component (A) is preferably a silyl group of the formula (1) wherein a is 2.

The component (A) may be used alone, or two or more thereof may be used in combination.

### «(Meth)acrylate polymer (B)>>

In the present invention, a (meth)acrylate polymer (B) having a number-average molecular weight of at least 1000 but less than 8000 and containing per molecule on average 0.5 to 1.5 reactive silyl groups is used as an essential component.

The number-average molecular weight of the component (B) needs to be at least 1000 but less than 8000 as measured by GPC relative to polystyrene standards. The number-average molecular weight is more preferably at least 2000 but not more than 7500, still more preferably at least 3000 but not more than 7000, and particularly preferably at least 4000 but not more than 6000. If the component (B) has a number-average molecular weight of less than 1000, the resulting cured product may have reduced elongation properties, while if the component (B) has a number-average molecular weight of 8000 or more, the resulting curable composition may have a high viscosity and poor workability.

The component (B) needs to contain per molecule on average 0. 5 to 1. 5 reactive silyl groups, preferably 0. 6 to 1. 4 reactive silyl groups, more preferably 0.7 to 1.3 reactive silyl groups, still more preferably 0.8 to 1.2 reactive silyl groups, and particularly preferably 0.9 to 1.1 reactive silyl groups. If the component (B) contains less than 0.5 reactive silyl groups, curability and creep resistance may be reduced so that initial adhesion and weather-resistant adhesion are less likely to be provided. Conversely, if the component (B) contains more than 1.5 reactive silyl groups, the resulting cured product may become hard and have reduced elongation properties.

In view of cured strength and creep resistance, the reactive silyl group in the component (B) is preferably a silyl group of the formula (1) wherein a is 3.

The component (B) may be used alone, or two or more thereof may be used in combination.

In the curable composition used in the present invention, the ratio of a sum of the weight "a" of the component (A) and the weight "b" of the component (B) to the total weight "x" of the curable composition excluding the later-mentioned component (F), (a + b)/x, needs to be 60 to 99% by weight.

The combined use of the component (A) and the component (B) can provide high elongation properties while reducing viscosity. Further, when the ratio "(a + b)/x" is set to be as high as 60 to 99% by weight, the curable composition will form a densely cross-linked structure from the (meth)acrylate polymers, which is highly stable against light transmitted through glass or other members. Thus, the curable composition can have excellent weather-resistant adhesion. The ratio "(a + b) /x" is preferably 62 to 95% by weight, more preferably 63 to 90% by weight, still more preferably 64 to 80% by weight, and particularly preferably 65 to 70% by weight. If the ratio "(a + b)/x" is less than 60% by weight by addition of a polyoxyalkylene polymer, a plasticizer or the like, degradation due to light may proceed so that weather-resistant adhesion can become insufficient. Conversely, if the ratio "(a + b)/x" exceeds 99% by weight, the curable composition may have a high viscosity and poor workability, and the cured product may have lower elongation properties.

The ratio (a/b) between the weight "a" of the component (A) and the weight "b" of the component (B) is preferably 1/2 to 4/1, more preferably 2/3 to 3/1, and particularly preferably 1/1 to 2/1. If the ratio (a/b) is less than 1/2, the cured product may have lower elongation properties, while if the ratio (a/b) is more than 4/1, the curable composition may have a high viscosity and poor workability.

In the components (A) and (B), the (meth) acrylate monomer which forms the backbone of the (meth) acrylate polymers is not particularly limited and may be of any type. Examples include (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The (meth)acrylate polymers may be obtained by copolymerizing a vinyl monomer described below with the (meth) acrylate monomer. Examples of the vinyl monomer include styrene monomers such as styrene, vinyltoluene, α-methylstyrene, chlorostyrene, and styrenesulfonic acid, and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl or dialkyl esters of maleic acid; fumaric acid, and monoalkyl or dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. These may be used alone, or a plurality of these may be copolymerized. In view of, for example, physical properties of the product, the polymer is preferably formed from a styrene monomer or (meth)acrylate monomer, among these monomers.

The component (A) and/or the component (B) are/is more preferably a (meth)acrylic polymer formed from an acrylate monomer and a methacrylate monomer, and particularly preferably an acrylic polymer formed from an acrylate monomer. For use in on-site construction where low viscosity is required for high workability, acrylate monomers are preferred. The proportion of acrylate monomer units to total monomer units is preferably 10% by weight or more, more preferably 30% by weight or more, still more preferably 50% by weight or more, and particularly preferably 70% by weight or more. Among acrylate monomers, butyl acrylate is particularly preferred because it results in low viscosity and excellent workability. The proportion of butyl acrylate monomer units to total monomer units is preferably 10% by weight or more, more preferably 30% by weight or more, still more preferably 50% by weight or more, and particularly preferably 70% by weight or more.

For applications where oil resistance or the like is required, such as automobile application, copolymers mainly derived from ethyl acrylate are further preferred. Such polymers mainly derived from ethyl acrylate tend to have slightly poor low-temperature properties (cold resistance) while having excellent oil resistance. To improve the low-temperature properties, the ethyl acrylate may be partially replaced with butyl acrylate. However, as the proportion of butyl acrylate increases, the good oil resistance is impaired. Thus, the proportion of butyl acrylate is preferably 40% or less, more preferably 30% or less, in applications requiring oil resistance. Moreover, in order to improve low-temperature properties and the like without impairing oil resistance, it is preferable to use a compound, such as 2-methoxyethyl acrylate or 2-ethoxyethyl acrylate, in which an oxygen atom has been introduced into a side-chain alkyl group. However, heat resistance tends to be deteriorated by the introduction of an alkoxy group having an ether bond into the side chain. Thus, the proportion of such a compound is preferably 40% or less in applications requiring heat resistance. Suitable polymers can be obtained by adjusting the proportions according to required physical properties, such as oil resistance, heat resistance, or low-temperature properties, depending on the particular application or requirements. For example, polymers having an excellent balance of physical properties including oil resistance, heat resistance, and low-temperature properties include, but are not limited, copolymers of ethyl acrylate/butyl acrylate/2-methoxyethyl acrylate (weight ratio: 40 to 50/20 to 30/30 to 20). In the present invention, these preferred monomers may be copolymerized or even block-copolymerized with another monomer. In such cases, these preferred monomers are preferably contained at a ratio by weight of 40% by weight or more. It should be noted that the expression "(meth)acrylic acid", for example, represents acrylic acid and/or methacrylic acid.

The (meth)acrylate polymers may be synthesized by any method, including known methods. However, polymers obtained by common free radical polymerization, in which an azo compound, peroxide or the like is used as a polymerization initiator, generally have a molecular weight distribution value as great as 2 or more and unfortunately have high viscosities. Thus, living radical polymerization is preferably employed to obtain a (meth)acrylate polymer that has a narrow molecular weight distribution and a low viscosity and contains crosslinkable functional groups at a molecular chain end at a high ratio.

A more preferred method for producing a (meth)acrylate polymer containing a specific functional group, among "living radical polymerization" methods, is "atom transfer radical polymerization" in which (meth)acrylate monomers are polymerized using an initiator such as an organic halide or sulfonyl halide compound in the presence of a transition metal complex catalyst because the atom transfer radical polymerization not only has the characteristics of "living radical polymerization" but also can provide polymers terminated with a halogen or the like which is relatively advantageous to functional-group exchange reactions, and permits a high degree of freedom in selecting an initiator and a catalyst. Examples of the atom transfer radical polymerization include a method described in Matyjaszewski et al, Journal of the American Chemical Society (J. Am. Chem. Soc.), 1995, vol. 117, p. 5614.

The reactive silyl group in the component (A) or the component (B) may be a group represented by the formula (1):

-SiR¹₃₋ₐXₐ (1)

wherein the (3-a) R¹s each independently represent a C1-C20 alkyl group, a C3-C8 cycloalkyl group, a C6-C20 aryl group, a C7-C20 aralkyl group, or a triorganosiloxy group represented by (R')₃SiO- wherein the R's each independently represent a C1-C20 substituted or unsubstituted hydrocarbon group; the a Xs each independently represent a hydroxy group or a hydrolyzable group; and a is 1, 2, or 3.

The hydrolyzable group is not particularly limited, and may be a conventionally known hydrolyzable group. Specific examples include a hydrogen atom, a halogen atom, an alkoxy group, an acyloxy group, a ketoxymate group, an amino group, an amido group, an acid amido group, an aminooxy group, a mercapto group, and an alkenyloxy group. Among these, the hydrolyzable group is preferably a hydrogen atom, an alkoxy group, an acyloxy group, a ketoxymate group, an amino group, an amido group, an aminooxy group, a mercapto group, or an alkenyloxy group. It is particularly preferably an alkoxy group because of its mild hydrolyzability and good workability.

That is, groups represented by the following formula (2) are preferred because of their mild hydrolyzability and good workability.

-SiR¹₃₋ₐ(OR²)ₐ (2)

In the formula, a and R¹ are as defined above; and the a R²s each independently represent a C1-C8 hydrocarbon group.

One to three hydrolyzable or hydroxy groups can be bonded to one silicon atom, and the number of these groups is preferably two or three in view of curability. In the case that two or more hydrolyzable or hydroxy groups are bonded to a silicon atom, these groups may be the same as or different from each other. Reactive silyl groups each having three hydroxy or hydrolyzable groups on a silicon atom are preferred because such groups have high activity and achieve good curability and can also provide cured products with excellent recovery, durability, and creep resistance. That is, the value of a in the formula (1) or formula (2) is preferably 2 or 3, more preferably 3, in view of curability and recovery. Reactive silyl groups each having two hydroxy or hydrolyzable groups on a silicon atom, on the other hand, are preferred because such groups have excellent storage stability and can also provide cured products with high elongation and high strength. That is, the value of a in the formula (1) or formula (2) is preferably 2 in view of storage stability and cured properties.

Specific examples of R¹ in the formula (1) and formula (2) include alkyl groups such as a methyl group and an ethyl group; cycloalkyl groups such as a cyclohexyl group; aryl groups such as a phenyl group; aralkyl groups such as a benzyl group; and triorganosiloxy groups represented by (R')₃SiO- with R' being a methyl group, a phenyl group or the like. A methyl group is particularly preferred among them.

More specific examples of the reactive silyl group include a trimethoxysilyl group, a triethoxysilyl group, a triisopropoxysilyl group, a dimethoxymethylsilyl group, a diethoxymethylsilyl group, and a diisopropoxymethylsilyl group. A trimethoxysilyl group, a triethoxysilyl group, and a dimethoxymethylsilyl group are more preferred as they have high activity and achieve good curability. Particularly preferred is a trimethoxysilyl group. A dimethoxymethylsilyl group is also particularly preferred in view of storage stability and elongation properties. A triethoxysilyl group and a diethoxymethylsilyl group are also particularly preferred because the alcohol generated in connection with the hydrolysis reaction of the reactive silyl group is ethanol in such cases, resulting in higher safety.

The reactive silyl group may be introduced into the (meth)acrylate polymers by conventionally known methods. Specifically, for example, the following methods are mentioned.

Examples of the method of synthesizing a reactive silyl group-containing (meth)acrylate polymer include:
(A) a method in which an alkenyl group-containing (meth)acrylate polymer is addition reacted with a reactive silyl group-containing hydrosilane compound in the presence of a hydrosilylation catalyst;
(B) a method in which a hydroxy group-containing (meth)acrylate polymer is reacted with a compound containing a group capable of reacting with a hydroxy group, such as an isocyanate group, and a reactive silyl group in the same molecule;
(C) a method in which a compound containing both a polymerizable alkenyl group and a reactive silyl group in the same molecule is reacted in synthesis of a (meth)acrylate polymer by radical polymerization;
(D) a method in which a reactive silyl group-containing chain transfer agent is used in synthesis of a (meth)acrylate polymer by radical polymerization; and
(E) a method in which a (meth) acrylate polymer containing a highly reactive carbon-halogen bond is reacted with a compound
containing a reactive silyl group and a stable carbanion in the same molecule.

The alkenyl group-containing (meth) acrylate polymer used in the method (A) can be obtained by various methods. It may be synthesized by, but not limited to, the following methods.

(A-a) A method in which a compound containing both a polymerizable alkenyl group and a poorly polymerizable alkenyl group in the same molecule, such as ones represented by the formula (3) below, is reacted as a second monomer in synthesis of a (meth)acrylate polymer by radical polymerization. H₂C=C(R²⁰)-R²¹-R²²-C(R²³)=CH₂ (3)

In the formula, R²⁰ represents a hydrogen atom or a methyl group; R²¹ represents -C(O)O- or a o-, m-, or p-phenylene group; R²² represents a direct bond or a C1-C20 divalent organic group and may contain at least one ether bond; and R²³ represents a hydrogen atom or a C1-C20 alky group, a C6-C20 aryl group, or a C7-C20 aralkyl group.

The timing of the reaction of the compound containing both a polymerizable alkenyl group and a poorly polymerizable alkenyl group in the same molecule is not limited. Particularly in the case of living radical polymerization, if rubbery properties are expected, the compound is preferably reacted as a second monomer at the final stage of the polymerization reaction or after completion of the reaction of a predetermined monomer.
(A-b) A method in which a compound containing at least two poorly polymerizable alkenyl groups, such as 1, 5-hexadiene, 1,7-octadiene, or 1, 9-decadiene, is reacted at the final stage of the polymerization reaction or after completion of the reaction of a predetermined monomer in synthesis of a (meth)acrylate polymer by living radical polymerization.
(A-c) A method in which a (meth)acrylate polymer containing a highly reactive carbon-halogen bond is reacted with one of various alkenyl group-containing organic metal compounds, e.g., organic tins such as allyltributyltin or allyltrioctyltin, to substitute the halogen.
(A-d) A method in which a (meth)acrylate polymer containing a highly reactive carbon-halogen bond is reacted with a stabilized carbanion containing an alkenyl group, such as ones represented by the formula (4) below, to substitute the halogen.

   M⁺C⁻(R²⁴)(R²⁵)-R²⁶-C(R²³)=CH₂ (4)

In the formula, R²³ is as defined above; R²⁴ and R²⁵ each represent an electron-withdrawing group capable of stabilizing the carbanion C⁻, or one of them represents such an electron-withdrawing group and the other represents a hydrogen atom, a C1-C10 alkyl group, or a phenyl group; R²⁶ represents a direct bond or a C1-C10 divalent organic group, and may contain at least one ether bond; and M⁺ represents an alkali metal ion or a quaternary ammonium ion.

The electron-withdrawing group for R²⁴ and R²⁵ is particularly preferably one having a structure of -CO₂R, -C(O)R or -CN.
(A-e) A method in which a (meth)acrylate polymer containing a highly reactive carbon-halogen bond is reacted with an elemental metal, such as zinc, or an organic metal compound to form an enolate anion, which is then reacted with an alkenyl group-containing electrophilic compound, such as an alkenyl group-containing compound that contains a leaving group (e.g. halogen atom, acetyl group), an alkenyl group-containing carbonyl compound, an alkenyl group-containing isocyanate compound, or an alkenyl group-containing acid halide.
(A-f) A method in which a (meth)acrylate polymer containing a highly reactive carbon-halogen bond is reacted with an alkenyl group-containing oxy anion or carboxylate anion, such as ones represented by the formula (5) or (6) below, to substitute the halogen.

   H₂C=C(R²³)-R²⁷-O⁻M⁺ (5)

In the formula, R²³ and M⁺ are as defined above; and R²⁷ represents a C1-C20 divalent organic group and may contain at least one ether bond.

H₂C=C(R²³)-R²⁸-C(O)O⁻M⁺ (6)

In the formula, R²³ and M⁺ are as defined above; and R²⁸ represents a direct bond or a C1-C20 divalent organic group and may contain at least one ether bond.

The above-mentioned (meth) acrylate polymer containing a highly reactive carbon-halogen bond may be synthesized by, but not limited to, the atom transfer radical polymerization methods using an organic halide or the like as an initiator and a transition metal complex catalyst, as mentioned above.

Moreover, the alkenyl group-containing (meth)acrylate polymer may be obtained from a hydroxy group-containing (meth)acrylate polymer by, but not limited to, the following methods.
(A-g) A method in which a hydroxy group of a hydroxy group-containing (meth) acrylate polymer is reacted with a base, such as sodium methoxide, followed by reaction with an alkenyl group-containing halide, such as allyl chloride.
(A-h) A method in which a hydroxy group of a hydroxy group-containing (meth)acrylate polymer is reacted with an alkenyl group-containing isocyanate compound, such as allyl isocyanate.
(A-i) A method in which a hydroxy group of a hydroxy group-containing (meth)acrylate polymer is reacted with an alkenyl group-containing acid halide, such as (meth)acrylic acid chloride in the presence of a base such as pyridine.
(A-j) A method in which a hydroxy group of a hydroxy group-containing (meth)acrylate polymer is reacted with an alkenyl group-containing carboxylic acid, such as acrylic acid, in the presence of an acid catalyst.

In the present invention, if no halogen is directly involved in the alkenyl group introduction, as in the method (A-a) or (A-b), the (meth)acrylate polymer is preferably synthesized by living radical polymerization. For easier control, the method (A-b) is more preferred.

In the case where an alkenyl group is introduced by replacement of the halogen of a (meth)acrylate polymer containing a highly reactive carbon-halogen bond, a (meth)acrylate polymer terminated with a highly reactive carbon-halogen bond is preferably used which is obtained by radical polymerization (atom transfer radical polymerization) of a vinyl monomer using an organic halide containing a highly reactive carbon-halogen bond or a halogenated sulfonyl compound as an initiator and a transition metal complex catalyst. For easier control, the method (A-f) is more preferred.

Moreover, typical examples of the reactive silyl group-containing hydrosilane compound include, but are not limited to, compounds represented by the following formula (7) :

H-(SiR⁴_{2-b}X_{b}O)ₘ-SiR³₃₋ₐXₐ (7)

wherein R³ and R⁹ each independently represent a C1-C20 alkyl group, a C6-C20 aryl group, a C7-C20 aralkyl group, or a triorganosiloxy group represented by (R')₃SiO- wherein the R's each independently represent a C1-C20 substituted or unsubstituted hydrocarbon group; X is as defined above; and a is 0, 1, 2, or 3, and b is 0, 1, or 2, provided that a and b are not simultaneously 0; m is 0 or an integer of 1 to 19; and a + mb ≥ 1.

In view of easy availability, particularly preferred among these hydrosilane compounds are compounds containing a reactive group represented by the following formula (8):

H-SiR³₃₋ₐXₐ (8)

wherein R³ and X are as defined above; and a is 1, 2, or 3.

A transition metal catalyst is usually used in the addition of the reactive silyl group-containing hydrosilane compound to the alkenyl group. Examples of the transition metal catalyst include elemental platinum; solid platinum dispersed in a carrier such as alumina, silica, or carbon black; chloroplatinic acid; complexes of chloroplatinic acid with alcohols, aldehydes, or ketones; platinum-olefin complexes; and platinum(0)-divinyltetramethyldisiloxane complexes. Examples of catalysts other than platinum compounds include RhCl(PPh₃)₃, RhCl₃, RuCl₃, IrCl₃, FeCl₃, AlCl₃, PdCl₂·H₂O, NiCl₂, and TiCl₄.

The hydroxy group-containing (meth) acrylate polymer used in the methods (B) and (A-g) to (A-j) may be prepared by, but not limited to, the following methods.
(B-a) A method in which a compound containing both a polymerizable alkenyl group and a hydroxy group in the same molecule, such as ones represented by the formula (9) below, is reacted as a second monomer in synthesis of a (meth) acrylate polymer by radical polymerization.

   H₂C=C(R²⁰)-R²¹-R²²-OH (9)

   In the formula, R²⁰, R²¹, and R²² are as defined above.
   The timing of the reaction of the compound containing both a polymerizable alkenyl group and a hydroxy group in the same molecule is not limited. Particularly in the case of living radical polymerization, if rubbery properties are expected, the compound is preferably reacted as a second monomer at the final stage of the polymerization reaction or after completion of the reaction of a predetermined monomer.
(B-b) A method in which an alkenyl alcohol, such as 10-undecenol, 5-hexenol, or allyl alcohol, is reacted at the final stage of the polymerization reaction or after completion of the reaction of a predetermined monomer in synthesis of a (meth)acrylate polymer by living radical polymerization.
(B-c) A method in which a vinyl monomer is radically polymerized using a large amount of a hydroxy group-containing chain transfer agent such as a hydroxy group-containing polysulfide, as described in, for example, JP-A H05-262808.
(B-d) A method in which a vinyl monomer is radically polymerized using hydrogen peroxide or a hydroxy group-containing initiator, as described in, for example, JP-A H06-239912 or JP-A H08-283310.
(B-e) A method in which a vinyl monomer is radically polymerized using an excess amount of alcohol, as described in, for example, JP-A H06-116312.
(B-f) A method in which the halogen of a (meth) acrylate polymer having at least one highly reactive carbon-halogen bond is hydrolyzed, or reacted with a hydroxy group-containing compound, to introduce a hydroxy group into the end according to the method described in, for example, JP-A H04-132706.
(B-g) A method in which a (meth)acrylate polymer containing a highly reactive carbon-halogen bond is reacted with a stabilized carbanion containing a hydroxy group, such as ones represented by the formula (10) below, to substitute the halogen.

   M⁺C⁻(R²⁴)(R²⁵)-R²⁶-OH (10)

   In the formula, R²⁴, R²⁵, R²⁶, and M⁺ are as defined above.
   The electron-withdrawing group for R²⁴ and R²⁵ is particularly preferably one having a structure of -CO₂R, -C(O)R or -CN.
(B-h) A method in which a (meth)acrylate polymer containing a highly reactive carbon-halogen bond is reacted with an elemental metal, such as zinc, or an organic metal compound to form an enolate anion, which is then reacted with an aldehyde or ketone.
(B-i) A method in which a (meth)acrylate polymer containing a highly reactive carbon-halogen bond is reacted with a hydroxy group-containing oxy anion or carboxylate anion, such as ones represented by the formula (11) or (12) below, to substitute the halogen.

   HO-R²⁷-O⁻M⁺ (11)

   In the formula, R²⁷ and M⁺ are as defined above.

   HO-R²⁸-C(O)O⁻M⁺ (12)

   In the formula, R²⁸ and M⁺ are as defined above.
(B-j) A method in which a compound containing a poorly polymerizable alkenyl group and a hydroxy group, in the same molecule is reacted as a second monomer at the final stage of the polymerization reaction or after completion of the reaction of a predetermined monomer in synthesis of a (meth)acrylate polymer by living radical polymerization.

The compound may be, but is not limited to, a compound represented by the following formula (13):

H₂C=C(R²⁰)-R²⁷-OH (13)

wherein R²⁰ and R²⁷ are as defined above.

The compound represented by the formula (13) is not particularly limited but is preferably an alkenyl alcohol, such as 10-undecenol, 5-hexenol or allyl alcohol because of easy availability.

In the present invention, if no halogen is directly involved in the hydroxy group introduction, as in the method (B-a) to (B-e) and (B-j), the (meth)acrylate polymer is preferably synthesized by living radical polymerization. For easier control, the method (B-b) is more preferred.

In the case where a hydroxy group is introduced by replacement of the halogen of a (meth)acrylate polymer containing a highly reactive carbon-halogen bond, a (meth)acrylate polymer terminated with a highly reactive carbon-halogen bond is preferably used which is obtained by radical polymerization (atom transfer radical polymerization) of a vinyl monomer using an organic halide or a halogenated sulfonyl compound as an initiator and a transition metal complex catalyst. For easier control, the method (B-i) is more preferred.

Examples of the compound containing a reactive silyl group and a group capable of reacting with a hydroxy group, such as an isocyanate group, in the same molecule include γ-isocyanatopropyltrimethoxysilane, γ-isocyanatopropylmethyldimethoxysialne, and γ-isocyanatopropyltriethoxysilane. If necessary, commonly known catalysts for urethane formation reactions may be used.

Examples of the compound containing both a polymerizable alkenyl group and a reactive silyl group in the same molecule to be used in the method (C) include compounds represented by the formula (14) below, such as trimethoxysilylpropyl (meth)acrylate or methyldimethoxysilylpropyl (meth)acrylate.

H₂C=C(R²⁰)-R²¹-R²⁹-[Si(R⁴)_{2-b}(X)_{b}O]ₘ-Si(R³)₃₋ₐ(X)ₐ (14)

In the formula, R³, R⁴, R²⁰, R²¹, X, a, b, and mare as defined above; R²⁹ represents a direct bond or a C1-C20 divalent organic group which may have at least one ether bond; and a + mb ≥ 1.

The chain transfer agent method (D) is disclosed in, for example, JP-B H03-14068 and JP-B H04-55444. Examples of the reactive silyl group-containing chain transfer agent include reactive silyl group-containing mercaptans and reactive silyl group-containing hydrosilanes.

The (meth) acrylate polymer containing a highly reactive carbon-halogen bond used in the method (E) may be synthesized by, but not limited to, the atom transfer radical polymerization methods using an organic halide or the like as an initiator and a transition metal complex catalyst, as described above. Examples of the compound containing both a reactive silyl group and a stabilized carbanion in the same molecule include compounds represented by the following formula (15):

M⁺C⁻(R²⁴)(R²⁵)-R³⁰-C(H)(R³¹)-CH₂-[Si(R⁴)_{2-b}(X)_{b}O]ₘ-Si(R³)₃₋ₐ(X)ₐ (15)

wherein R³, R⁴, R²⁴, R²⁵, X, M⁺, a, b, and m are as defined above; R³⁰ represents a direct bond or a C1-C10 divalent organic group which may have at least one ether bond; R³¹ represents a hydrogen atom or a C1-C10 alkyl group, a C6-C10 aryl group, or a C7-C10 aralkyl group; and a + mb ≥ 1.

The electron-withdrawing group for R²⁴ and R²⁵ is particularly preferably one having a structure of -CO₂R, -C(O)R or -CN.

In the case where the curable composition contains a reactive silyl group-containing (meth)acrylate polymer obtained by a reactive silyl group introduction method such as (A-f) or (B) above, the cross-linked structure of the resulting cured product contains an ester bond or an urethane bond. Such a cured product tends to have slightly low heat resistance. Thus, to efficiently exert the effects of the present invention, the terminal functional group is preferably bonded via a carbon-carbon bond, without involving any heteroatom, to the polymer.

In addition to the above methods, the reactive silyl group-containing (meth) acrylate polymer may be prepared by, but not limited to, a free radical polymerization method using a chain transfer agent as disclosed in, for example, JP-A H06-211922, and an atom transfer radical polymerization method as disclosed in, for example, JP-A H09-272714.

The reactive silyl group-containing (meth)acrylate polymer is preferably produced by solution polymerization which is relatively less likely to cause gelation due to the reaction of the reactive silyl group upon polymerization.

For fast curing, the reactive silyl group in the (meth) acrylate polymer (A) and/or (B) is preferably present at an end of a side chain, rather than at a backbone end of the polymer. The component (A) and/or the component (B) is preferably a polymer obtained by polymerization of a monomer mixture containing a (meth)acrylate monomer containing the silyl group of the formula (1) because the reactive silyl group can be easily introduced into an end of a side chain of the polymer.

An organic polymer obtained by blending the reactive silyl group-containing (meth)acrylate polymer and a reactive silyl group-containing polyoxyalkylene polymer, which is a component (C) described later, may be prepared by, but not limited to, the methods disclosed in JP-A S59-122541, JP-A S63-112642, JP-A H06-172631, JP-A H11-116763, and the like.

A preferred specific example of a method for preparing the organic polymer includes blending a reactive silyl group-containing polyoxyalkylene polymer with a copolymer which contains a reactive silyl group and whose molecular chain substantially includes a (meth)acrylate monomer unit containing a C1-C7 alkyl group, as represented by the following formula (16):

-CH₂-C(R⁵)(COOR⁶)- (16)

wherein R⁵ represents a hydrogen atom or a methyl group, and R⁶ represents a C1-C7 alkyl group, and a (meth) acrylate monomer unit containing a C8 or higher alkyl group, as represented by the following formula (17):

-CH₂-C(R⁵)(COOR⁷)- (17)

wherein R⁵ is as defined above, and R⁷ is a C8 or higher alkyl group.

Examples of R⁶ in the formula (16) include C1-C7, preferably C1-C4, more preferably C1-C2 alkyl groups such as a methyl group, an ethyl group, a propyl group, an n-butyl group, and a t-butyl group. As R⁶, one alkyl group may be used, or two or more alkyl groups may be used in admixture.

Examples of R⁷ in the formula (17) include long-chain alkyl groups having 8 or more carbon atoms, usually 8 to 30 carbon atoms, preferably 8 to 20 carbon atoms, such as a 2-ethylhexyl group, a lauryl group, a tridecyl group, a cetyl group, a stearyl group, and a behenyl group. Like R⁶, one alkyl group may be used as R⁷, or two or more alkyl groups may be used in admixture.

The molecular chain of the (meth)acrylate polymer substantially includes the monomer units of the formulas (16) and (17). The term "substantially" herein means that the combined amount of the monomer units of the formulas (16) and (17) in the copolymer is more than 50% by weight. The combined amount of the monomer units of the formulas (16) and (17) is preferably at least 70% by weight.

Moreover, the ratio between the monomer units of formula (16) and formula (17) is preferably 95:5 to 40:60, more preferably 90:10 to 60:40 in terms of weight ratio.

Examples of monomer units that may be contained in the copolymer, other than those of the formulas (16) and (17), include monomer units derived from: acrylic acids such as acrylic acid and methacrylic acid; amide group-containing monomers such as acrylamide, methacrylamide, N-methylolacrylamide, and N-methylolmethacrylamide; epoxy group-containing monomers such as glycidyl acrylate and glycidyl methacrylate; amino group-containing monomers such as diethylaminoethyl acrylate, diethylaminoethyl methacrylate, and aminoethyl vinyl ether; and other monomers such as acrylonitrile, styrene, α-methylstyrene, alkyl vinyl ethers, vinyl chloride, vinyl acetate, vinyl propionate, and ethylene.

Another method for preparing an organic polymer obtained by blending the reactive silyl functional group-containing (meth)acrylate polymer may include polymerizing a (meth)acrylate monomer in the presence of a reactive silyl group-containing organic polymer. This preparation method is specifically disclosed in, for example, but not limited to, JP-A S59-78223, JP-A S59-168014, JP-A S60-228516, and JP-A S60-228517.

### <<Polyoxyalkylene polymer (C)>>

In the present invention, the curable composition may optionally contain a polyoxyalkylene polymer (C) containing a silyl group capable of crosslinking through formation of a siloxane bond.

The reactive silyl group in the component (C) may be as mentioned for the (meth)acrylate polymers. In particular, groups represented by the above formula (1) are mentioned.

The reactive silyl group contained in the component (C) is preferably a silyl group of the formula (1) wherein a is 2, in view of elongation properties.

The reactive silyl group may be introduced as described for the (meth)acrylate polymers.

The polyoxyalkylene polymer essentially has a repeating unit represented by the formula (18):

-R⁸-O- (18)

wherein R⁸ represents a C1-C14 linear or branched alkylene group. R⁸ in the formula (18) is preferably a C1-C14, more preferably C2-C4, linear or branched alkylene group. Specific examples of the repeating unit represented by the formula (18) include -CH₂O- -CH₂CH₂O- -CH₂CH(CH₃)O-, -CH₂CH(C₂H₅)O-, -CH₂C(CH₃)₂O-, and -CH₂CH₂CH₂CH₂O-. The backbone skeleton of the polyoxyalkylene polymer may consist only of one type of repeating unit, or may have two or more types of repeating units. In particular for use in sealants and the like, the polymer preferably mainly includes a polypropylene oxide polymer having 50% by weight or more of propylene oxide repeating units because such a polymer is amorphous and has a relatively low viscosity.

The polyoxyalkylene polymer may be synthesized by, but not limited to: a polymerization method using an alkali catalyst such as KOH; a polymerization method using a transition metal compound-porphyrin complex catalyst such as a complex obtained by the reaction between an organoaluminum compound and a porphyrin as disclosed in JP-A S61-215623; a polymerization method using a double metal cyanide complex catalyst as disclosed in, for example, JP-B S46-27250, JP-B S59-15336, and US Patent Nos. 3278457, 3278458, 3278459, 3427256, 3427334, and 3427335; a polymerization method using a polyphosphazene salt catalyst as disclosed in JP-A H10-273512; and a polymerization method using a phosphazene compound catalyst as mentioned in JP-A H11-060722.

The reactive silyl group-containing polyoxyalkylene polymer may be produced by methods disclosed in, for example, JP-B S45-36319, JP-B S46-12154, JP-AS50-156599, JP-AS54-6096, JP-A S55-13767, JP-AS55-13468, JP-AS57-164123, JP-BH03-2450, US Patent Nos. 3632557, 4345053, 4366307, and 4960844. Other non-limiting examples include polyoxyalkylene polymers having high molecular weight with a number-average molecular weight of 6000 or more and narrow molecular weight distribution with a Mw/Mn of 1.6 or less, as proposed in, for example, JP-A S61-197631, JP-A S61-215622, JP-A S61-215623, JP-AS61-218632, JP-A H03-72527, JP-A H03-47825, and JP-A H08-231707.

The polymer as the component (C) may contain a linear or branched alkylene group. The number-average molecular weight thereof is preferably about 500 to 100,000, more preferably 1,000 to 50,000, particularly preferably 3,000 to 30,000 as determined by GPC relative to polystyrene standards. A number-average molecular weight of lower than 500 tends to be disadvantageous for the elongation properties of the cured product. A number-average molecular weight of higher than 100,000 tends to lead to high viscosity and thus to be disadvantageous for workability.

To provide a rubbery cured product with high strength, high elongation, and a low elastic modulus, the polymer as the component (C) may preferably contain per molecule on average at least one, more preferably 1.1 to 5, still more preferably 1.2 to 3, further preferably 1. 3 to 2. 5, particularly preferably 1.4 to 2 reactive silyl groups. If the number of reactive silyl groups per molecule on average is less than one, curability can be insufficient, which makes it difficult to provide a good rubber elastic behavior. Also, if the number is more than five, crosslink density tends to be increased, resulting in lower elongation.

The reactive silyl group may be present at a backbone end or an end of a side chain of the organic polymer molecule, or may present at both the ends. Particularly, if the reactive silyl group is present at a backbone end of the molecule, the organic polymer component in the cured product finally obtained has an increased effective network size. Thus, a rubbery cured product having higher strength, higher elongation, and a lower elastic modulus tends to be obtained.

The component (C) may be used alone, or two or more thereof may be used in combination.

In the case of using the component (C), the ratio of a sum of the weight "a" of the component (A), the weight "b" of the component (B), and the weight "c" of the component (C) to the total weight "x" of the curable composition excluding the component (F) described later, (a + b + c) /x, is preferably 70 to 99% by weight.

If the component (C) is combined, high elongation properties can be achieved while reducing viscosity to low levels. Moreover, if the ratio of (a + b + c) /x is set as high as 70 to 99% by weight, a curable composition having excellent weather-resistant adhesion can be obtained. The ratio of (a + b + c) /x is more preferably 72 to 95% by weight, still more preferably 75 to 92% by weight, further preferably 78 to 90% by weight, and particularly preferably 80 to 85% by weight. A ratio of (a + b + c)/x of less than 70% by weight may result in insufficient weather-resistant adhesion. Conversely, if the ratio of (a + b + c)/x exceeds 99% by weight, the curable composition may have high viscosity and poor workability, and the cured product may have lower elongation properties.

The ratio of the weight "c" of the component (C) to a sum of the weight "a" of the component (A) and the weight "b" of the component (B), c/(a + b), is preferably 1/20 to 2/3, more preferably 1/10 to 1/2, and particularly preferably 1/5 to 1/3. If the ratio of c/(a + b) is less than 1/20, the curable composition may have high viscosity and poor workability, and the cured product may have lower elongation properties. Conversely, a ratio of c/(a + b) of more than 2/3 may result in insufficient weather-resistant adhesion.

### <<Silanol condensation catalyst (D)>>

The curable composition used in the present invention contains a silanol condensation catalyst as a component (D). The silanol condensation catalyst is not particularly limited, and may be a usually used silanol condensation catalyst that promotes the reaction of a hydrolyzable silyl group. Specific examples include metal salts of carboxylic acids such as tin 2-ethylhexanoate, tin versatate, and bismuth 2-ethylhexanoate; carboxylic acids such as 2-ethylhexanoic acid and versatic acid; tetravalent organotin compounds such as dibutyltin dilaurate, dibutyltin maleate, dibutyltin phthalate, dibutyltin dioctanoate, dibutyltin bis(2-ethylhexanoate), dibutyltin bis(methyl maleate), dibutyltin bis (ethyl maleate), dibutyltin bis (butyl maleate), dibutyltin bis(octyl maleate), dibutyltin bis(tridecyl maleate), dibutyltin bis(benzyl maleate), dibutyltin diacetate, dioctyltin bis(ethyl maleate), dioctyltin bis(octyl maleate), dibutyltin dimethoxide, dibutyltin bis(nonyl phenoxide), dibutenyltin oxide, dibutyltin bis(acetylacetonate), dibutyltin bis(ethylacetoacetate), reaction products of dibutyltin oxide with silicate compounds, reaction products of dialkyltin dicarboxylates, such as dibutyltin dilaurate, and silicate compounds, and reaction products of dibutyltin oxide with phthalic acid esters; organic titanates such as tetraisopropoxy titanium, tetra-n-butoxy titanium, diisopropoxytitanium bis(acetylacetonate), and diisopropoxytitanium bis(ethylacetoacetate); organoaluminum compounds such as aluminum tris(acetylacetonate), aluminum tris(ethylacetoacetate), and diisopropoxyaluminum ethylacetoacetate; zirconium compounds such as zirconium tetrakis(acetylacetonate); aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, dioctylamine, bis(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as laurylaniline, stearylaniline, and triphenylamine; and other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine, 3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5.4.0)undecene-7 (DBU), and 1,5-diazabicyclo(4.3.0)nonene-5 (DBN).

Metal salts of carboxylic acids and/or carboxylic acids are preferred among these examples as they show practical curing performance and can allow the resulting cured product to have more improved creep resistance, water-resistant adhesion, and low water absorption properties than when other silanol condensation catalysts are used.

The amount of the silanol condensation catalyst, component (D), per 100 parts by weight in total of the component (A) and the component (B) is preferably 0.01 to 5 parts by weight, more preferably 0.1 to 4 parts by weight, and still more preferably 0.5 to 3 parts by weight. An amount of less than 0.01 parts by weight may result in insufficient curability, while an amount exceeding 5 parts by weight may reduce storage stability.

### <<Silane coupling agent (E)>>

The curable composition used in the present invention contains a silane coupling agent as a component (E). Specific examples include isocyanate group-containing silanes such as γ-isocyanatopropyltrimethoxysilane, yγ-isocyanatopropyltriethoxysilane, γ-isocyanatopropylmethyldiethoxysilane, γ-isocyanatopropylmethyldimethoxysilane, (isocyanatomethyl)-trimethoxysilane, (isocyanatomethyl)dimethoxymethylsilane, (isocyanatomethyl)triethoxysilane, and (isocyanatomethyl)-diethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N,N'-bis[3-(trimethoxysilyl)propyl]ethylenediamine; ketimine silanes such as N-(1,3-dimethylbutylidene)-3-(triethoxysilyl)-1-propaneamine; mercapto group-containing silanes such as γ-mercaptopropyltrimethoxysilane, γ-mercaptopropyltriethoxysilane, γ-mercaptpropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenyl bis(2-methoxyethoxy)silane, and N-β-(carboxymethyl)-aminoethyl-γ-aminopropyltrimethoxysilane; vinylically unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; and isocyanurate silanes such as tris(3-trimethoxysilylpropyl) isocyanurate. Other examples of the silane coupling agent include derivatives obtained by modifying these silane coupling agents, such as amino-modified silyl polymers, silylated amino polymers, unsaturated aminosilane complexes, phenylamino long-chain alkyl silanes, amino-silylated silicones, and silylated polyesters. Reaction products of the silane coupling agent include reaction products of the aminosilanes and epoxysilanes, reaction products of the aminosilanes and isocyanate silanes, and partial condensates of various silane coupling agents.

The amount of the silane coupling agent, component (E), per 100 parts by weight in total of the component (A) and the component (B) is preferably 0.1 to 20 parts by weight, more preferably 1 to 10 parts by weight, and still more preferably 3 to 7 parts by weight. If the amount is less than 0.1 parts by weight, adhesion and storage stability may be insufficient, while if the amount exceeds 20 parts by weight, the cured product may have lower elongation and insufficient depth curability.

### <<Inorganic filler (F)>>

The curable composition used in the present invention contains an inorganic filler. Examples of the inorganic filler include reinforcing fillers such as fumed silica, precipitated silica, crystalline silica, fused silica, dolomite, silicic anhydride, hydrous silicic acid, and carbon black; fibrous fillers such as ground calcium carbonate, colloidal calcium carbonate, magnesium carbonate, diatomite, calcined clay, clay, talc, titanium oxide, bentonite, organic bentonite, ferric oxide, fine aluminum powder, flint powder, zinc oxide, active zinc white, shirasu balloons, glass microballoons, asbestos, glass fiber, and filaments.

The amount of the inorganic filler, component (F), per 100 parts by weight in total of the component (A) and the component (B) is preferably 10 to 500 parts by weight, more preferably 50 to 300 parts by weight, and still more preferably 100 to 200 parts by weight. If the amount is less than 10 parts by weight, adhesion may be insufficient, and the cured product may have insufficient strength. Conversely, if the amount exceeds 500 parts by weight, the cured product may have lower elongation properties.

### «Plasticizer»

The curable composition used in the present invention may contain a plasticizer. The plasticizer can be used to control the viscosity and slump characteristics of the curable composition and the tensile strength, elongation, and other mechanical properties of a cured product of the composition. Examples of the plasticizer include phthalic acid esters such as dibutyl phthalate, diheptyl phthalate, di(2-ethylhexyl)phthalate, diisodecyl phthalate, and butyl benzyl phthalate; nonaromatic dibasic acid esters such as dioctyl adipate, dioctyl sebacate, dibutyl sebacate, and isodecyl succinate; aliphatic esters such as butyl oleate and methyl acetyl ricinoleate; phosphoric acid esters such as tricresyl phosphate and tributyl phosphate; trimellitic acid esters; chlorinated paraffins; hydrocarbon oils such as alkyl diphenyls and partially hydrogenated terphenyls; process oils; and epoxy plasticizers such as epoxidized soybean oil and benzyl epoxystearate.

The plasticizer may also be a polymeric plasticizer. If a polymeric plasticizer is used, the initial physical properties can be maintained for a longer period of time than when a low molecular weight plasticizer, which contains no polymer component in the molecule, is used. Moreover, the polymeric plasticizer can improve the drying properties (also referred to as coating properties) of an alkyd coating material applied to the cured product. Specific examples of the polymeric plasticizer include, but are not limited to, vinyl polymers obtained by polymerizing vinyl monomers by various methods; esters of polyalkylene glycols such as diethylene glycol dibenzoate, triethylene glycol dibenzoate, and pentaerythritol esters; polyester plasticizers obtained from dibasic acids (e.g. sebacic acid, adipic acid, azelaic acid, phthalic acid) and divalent alcohols (e.g. ethylene glycol, diethylene glycol, triethylene glycol, propylene glycol, dipropylene glycol) ; polyethers such as polyether polyols (e.g., polyethylene glycol, polypropylene glycol, and polytetramethylene glycol) which have a molecular weight of 500 or higher, or even 1000 or higher, and derivatives thereof obtained by replacing the hydroxy groups of these polyether polyols with ester groups, ether groups or other groups; polystyrenes such as polystyrene and poly-α-methylstyrene; polybutadiene, polybutene, polyisobutylene, polybutadiene-acrylonitrile, and polychloroprene.

Among these polymeric plasticizers, those compatible with the organic polymers of the components (A) to (C) are preferred. Thus, polyethers and vinyl polymers are preferred. Moreover, the use of polyethers as plasticizers is preferred because then surface curability and depth curability are improved, and curing retardation will not occur after storage. In particular, polypropylene glycol is more preferred. Moreover, in view of compatibility, weather resistance, and heat resistance, vinyl polymers are preferred. Among vinyl polymers, acrylic polymers and/or methacrylic polymers are preferred, and acrylic polymers such as polyacrylic acid alkyl esters are more preferred. The polymers may preferably be synthesized by living radical polymerization, more preferably by atom transfer radical polymerization, which allows for narrow molecular weight distribution and low viscosity. Also preferred are polymers prepared by the so-called SGO process in which alkyl acrylate monomers are continuously bulk polymerized under high-temperature and high-pressure conditions, as disclosed in JP-A 2001-207157.

The number-average molecular weight of the polymeric plasticizer is preferably 500 to 15000, more preferably 800 to 10000, still more preferably 1000 to 8000, particularly preferably 1000 to 5000, and most preferably 1000 to 3000. If the molecular weight is too low, the plasticizer exudes due to heat or rain over time, and thus the initial physical properties cannot be maintained for a long period of time, failing to improve alkyd coating properties. If the molecular weight is too high, viscosity becomes high enough to deteriorate workability. The molecular weight distribution of the polymeric plasticizer is not particularly limited but is preferably narrow. The molecular weight distribution is preferably less than 1.80, more preferably 1.70 or less, still more preferably 1.60 or less, further preferably 1.50 or less, particularly preferably 1.40 or less, and most preferably 1.30 or less.

The number-average molecular weight is measured by GPC in the case of vinyl polymers and by end group analysis in the case of polyether polymers. Moreover, the molecular weight distribution (Mw/Mn) is measured by GPC (relative to polystyrene standards).

The plasticizer may be used alone or in combination of two or more. The plasticizer may also be a combination of a low molecular weight plasticizer and a polymeric plasticizer. The plasticizer may be added at the time of polymer production.

In the case of using the plasticizer, too much an amount of plasticizer may result in insufficient weather-resistant adhesion. Thus, the amount of plasticizer per 100 parts by weight in total of the component (A) and the component (B) is preferably less than 30 parts by weight, more preferably less than 20 parts by weight, and still more preferably less than 10 parts by weight. Particularly preferably, substantially no plasticizer is contained.

### «Solvent»

The curable composition used in the present invention may contain a solvent to reduce the viscosity of the composition, enhance the thixotropy, and improve the workability. The solvent is not particularly limited, and may be various compounds. Specific examples include hydrocarbon solvents such as toluene, xylene, heptane, hexane, and petroleum solvents; halogenated solvents such as trichloroethylene; ester solvents such as ethyl acetate and butyl acetate; ketone solvents such as acetone, methyl ethyl ketone, and methyl isobutyl ketone; ether solvents; alcohol solvents such as methanol, ethanol, and isopropanol; and silicone solvents such as haxamethylcyclotrisiloxane, octamethylcyclotetrasiloxane, and decamethylcyclopentasiloxane.

If a solvent is used, in view of the problem of air pollution that can occur when the composition is used indoors, the solvent preferably has a boiling point of 150°C or higher, more preferably 200°C or higher, and particularly preferably 250°C or higher. The solvent may be used alone or in combination of two or more.

However, a large solvent content may be toxic to humans and may cause a reduction in the volume of the cured product, and the like. Thus, the amount of solvent per 100 parts by weight in total of the component (A) and the component (B) is preferably less than 1 part by weight, more preferably less than 0.1 parts by weight. Most preferably, substantially no solvent is contained.

### <<Thixotropy-imparting agent>>

The curable composition used in the present invention may optionally contain a thixotropy-imparting agent (anti-sagging agent) to prevent sagging and improve workability. Examples of the anti-sagging agent include, but are not limited to, polyamide waxes, hydrogenated castor oil derivatives, and metal soaps such as calcium stearate, aluminum stearate, and barium stearate. Moreover, if powdery rubber having a particle size of 10 to 500 µm as disclosed in JP-A H11-349916 or organic fibers as disclosed in JP-A 2003-155389 are used, then the resulting composition is highly thixotropic and has good workability. The thixotropy-imparting agent (anti-sagging agent) may be used alone or in combination of two or more. The amount of thixotropy-imparting agent is preferably in the range of 0.1 to 20 parts by weight per 100 parts by weight in total of the component (A) and the component (B).

### «Antioxidant»

The curable composition used in the present invention may contain an antioxidant (age resistor). The use of an antioxidant enhances the heat resistance of the cured product. Examples of the antioxidant include hindered phenol antioxidants, monophenol antioxidants, bisphenol antioxidants, and polyphenol antioxidants. Hindered phenol antioxidants are particularly preferred. The following hindered amine photostabilizers may also be used: TINUVIN 622LD, TINUVIN 144, CHIMASSORB 944LD, and CHIMASSORB 119FL (all available from Ciba Specialty Chemicals) ; MARK LA-57, MARK LA-62, MARK LA-67, MARK LA-63, and MARK LA-68 (all available from Asahi Denka Co., Ltd.); and SANOL LS-770, SANOL LS-765, SANOL LS-292, SANOL LS-2626, SANOL LS-1114, and SANOL LS-744 (all available from Sankyo Lifetech Co., Ltd.). Specific examples of the antioxidant also include those disclosed in JP-A H04-283259 and JP-A H09-194731. The amount of antioxidant per 100 parts by weight in total of the component (A) and the component (B) is preferably in the range of 0.1 to 10 parts by weight, and more preferably 0.2 to 5 parts by weight.

### «Photostabilizer»

The curable composition used in the present invention may contain a photostabilizer. The photostabilizer can be used to prevent photooxidative degradation of the cured product. Examples of the photostabilizer include benzotriazole compounds, hindered amine compounds, and benzoate compounds. Hindered amine compounds are particularly preferred. The amount of photostabilizer per 100 parts by weight in total of the component (A) and the component (B) is preferably in the range of 0.1 to 10 parts by weight, and more preferably 0.2 to 5 parts by weight. Specific examples of the photostabilizer are also disclosed in JP-A H09-194731.

In the case that the curable composition used in the present invention further contains a photocurable substance, particularly an unsaturated acrylic compound, in view of improving the storage stability of the composition, a tertiary amine-containing hindered amine photostabilizer is preferably used as a hindered amine photostabilizer, as described in JP-A H05-70531. Examples of the tertiary amine-containing hindered amine photostabilizer include photostabilizers sold, for example, under the following names: TINUVIN 622LD, TINUVIN 144, and CHIMASSORB 119FL (all available from Ciba Specialty Chemicals) ; MARK LA-57, LA-62, LA-67, and LA-63 (all available from Asahi Denka Co., Ltd.); and SANOL LS-765, LS-292, LS-2626, LS-1114, and LS-744 (all available from Sankyo Lifetech Co., Ltd.).

### «Ultraviolet absorber»

The composition used in the present invention may contain an ultraviolet absorber. The ultraviolet absorber can be used to increase the surface weather resistance of the cured product. Examples of the ultraviolet absorber include benzophenone compounds, benzotriazole compounds, salicylate compounds, substituted tolyl compounds, and metal chelate compounds. Benzotriazole compounds are particularly preferred. The amount of ultraviolet absorber per 100 parts by weight in total of the component (A) and the component (B) is preferably in the range of 0.1 to 10 parts by weight, and more preferably 0.2 to 5 parts by weight. It is preferable to use a combination of a phenol or hindered phenol antioxidant, a hindered amine photostabilizer, and a benzotriazole ultraviolet absorber.

### <<Other additives>>

The curable composition used in the present invention may optionally contain various additives to adjust the physical properties of the curable composition or cured product. Examples of the additives include epoxy resins, epoxy resin-curing agents, photocurable substances, oxygen curable substances, silanol-containing compounds, tackifiers, thermoplastic elastomers, flame retardants, curability modifiers, radical inhibitors, metal deactivators, antiozonants, phosphorus-containing peroxide decomposers, lubricants, pigments, foaming agents, repellents for ants, and antifungal agents. Each of these various additives may be used alone or in combination of two or more types. Specific examples of the additives other than the ones mentioned herein are described in, for example, JP-B H04-69659, JP-B H07-108928, JP-A S63-254149, JP-A S64-22904, and JP-A 2001-72854.

### «Method for preparing curable composition»

The curable composition used in the present invention may be prepared as a one-pack composition which is prepared by previously compounding all the formulation components and storing the mixture in a hermetically closed vessel, and which is cured by moisture in the air after application. Alternatively, the curable composition may be prepared as a two-pack composition which separately includes a polymer composition and a curing agent mixture prepared by mixing a curing catalyst, filler, plasticizer, water, and other components, and in which the polymer composition and the mixture are mixed prior to use. In view of workability, the one-pack composition is preferred.

In the case that the curable composition is prepared as a one-pack composition, since all the formulation components are mixed in advance, it is preferred to dehydrate and dry the water-containing formulation components prior to use or to dehydrate them, for example, under reduced pressure during the mixing and kneading. In the case that the curable composition is prepared as a two-pack composition, since a curing catalyst needs not be mixed in the base mixture containing the reactive silyl group-containing polymers, gelation is less likely to occur even when a small amount of water remains in the formulation components; still, if long-term storage stability is required, the formulation components are preferably dehydrated and dried. Suitable methods for dehydration and drying are heat drying in the case of solids such as powder, and dehydration under reduced pressure or dehydration using synthetic zeolite, active alumina, silica gel, quicklime, magnesium oxide or the like in the case of liquids. Alternatively, dehydration may be carried out by adding a small amount of an isocyanato compound to react the isocyanato group and water. Or, dehydration may be carried out by adding an oxazolidine compound, such as 3-ethyl-2-methyl-2-(3-methylbutyl)-1,3-oxazolidine, so that the compound reacts with water. Storage stability can be further improved by, in addition to performing the dehydration and drying method mentioned above, adding a lower alcohol (e. g. methanol, ethanol) or an alkoxysilane compound (e.g. n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, γ-glycidoxypropyltrimethoxysilane).

When a dehydrating agent, particularly a silicon compound that can react with water, such as vinyltrimethoxysilane, is used, the amount thereof is preferably 0.1 to 20 parts by weight, more preferably 0. 5 to 10 parts by weight, per 100 parts by weight in total of the component (A) and the component (B).

The curable composition used in the present invention may be prepared by any usual method, such as, but not limited to, by mixing and kneading the aforementioned components at room temperature or under heat by a mixer, a roller, a kneader, or the like; and by dissolving the components in a small amount of an appropriate solvent and mixing them.

When exposed to the air, the curable composition used in the present invention forms a three-dimensional network structure by the action of moisture, so that it is cured into a rubbery, elastic solid.

### «Structure»

The structure of the present invention which includes a joint formed by the member (I), and the cured product (II) of the curable composition filling the joint is not particularly limited, and may be one having a structure mentioned below.

One structure may be mentioned which includes a plurality of opposed parallellight-transmitting members (I) (e.g., glass plates) spaced apart a predetermined distance optionally via at least one spacer frame member formed by framing a member such as a spacer; and a cured product (II) of a curable composition that is applied to a joint formed around the peripheries of the members (I).

Such a structure may be used for, for example, insulating glass, and can be applied to various insulating glasses, including insulating glass for common windows, skylights, vehicles, industrial windows, or the like. For dual seal construction, a butyl sealant is used for primary sealing, and the cured product (II) of the curable composition is used for secondary sealing. Conventionally, polysulfide (PS)-, polyurethane (PU)-, or silicone (SR)-based room temperature curable sealants have been used for secondary sealing. Unfortunately, polysulfide (PS)- or polyurethane (PU)-based sealants have drawbacks in terms of weather-resistant adhesion, and silicone (SR)-based sealants have problems with gas (e.g., argon gas) permeability. In contrast, these problems can be solved by using the cured product (II) of the curable composition for secondary sealing.

Another structure may be mentioned which includes a plurality of light-transmitting members (I) such as glass plates, and a cured product (II) of a curable composition that is applied to a joint formed by a window frame member (e.g., a window sash) attached around the peripheries of the members (I).

Such a structure may be used for, for example, window frame openings, and can be applied to various window frame openings, including windows of general houses, skylights, windows of vehicles, industrial windows, and the like.

The structure may be constructed by any method including common construction methods. Preferred examples of the method include glass curtain wall construction, sash frame inset construction, metal curtain wall construction, glass screen construction, structural sealant glazing system construction (SSG construction), tempered glass screen construction, dot point glazing construction (DPG construction), and metal point glazing construction (MPG construction).

The sealing method using the curable composition used in the present invention is not particularly limited. A preferred method includes the steps of cleaning the adherend surface, inserting a backup material, inserting a spacer, attaching a masking tape, applying a primer, filling with a sealant, finishing the sealant, removing the masking tape, cleaning, aging, and the like.

Cleaning of the adherend surface is performed to remove materials which usually inhibit adhesion, such as rust, oils, dust, mortar debris, and coating materials. The cleaning needs to be carried out by a method appropriate for the adherend. It should to be noted that the adherend surface is sufficiently dried before the next step.

The backup material is inserted to ensure double sided adhesion and to adjust the filling depth. Examples of common backup materials include polyethylene closed cell foams, combinations of polyethylene continuous cell foams and polyethylene closed cell foams, and synthetic rubber. Examples of commonly used synthetic rubber include chloroprene, EPDM, and polyvinyl chloride resins.

The masking tape is used to prevent the structural members from staining in the subsequent steps and to form clear lines on both edges of the sealant. Materials that can be used for common masking tapes may be used as the material of the masking tape.

The primer is optionally applied to the adherend surface to adhere the sealant to the adherend surface. The primer used is not particularly limited and may be one commonly used for glass surfaces. Preferred examples include silicone primers and silane primers.

The sealant is filled starting from the bottom of the joint using a gun equipped with a nozzle that fits the width of the joint. During the filling, pressure is applied to prevent void, non-filled portions, and air inclusion.

The sealant filling the joint is finished with a spatula. Finishing with a spatula may be carried out in a conventional manner. In particular, it is preferable to dip a spatula formed of a polyethylene foam backer, rubber, or the like in an organic solvent such as kerosene, n-hexane, or toluene, and then rub the spatula against the surface of the sealant along one direction.

Immediately after the finishing with a spatula, the masking tape is removed.

After removing the masking tape, the periphery of the joint is cleaned.

Thereafter, curing is carried out using an appropriate material such as film, sheet, or plywood because the uncured sealant can stain the surrounding areas.

The sealant used in the present invention can also be used for transparent materials provided with a layer with anti-stain properties which is formed of a hydrophilic substance and free from photocatalysts.

The curable composition used in the present invention may be used in the structure of the present invention as a sealant for direct glazing, a sealant for insulating glass, a sealant for skylights, a sealant for skylight insulating glass, a sealant for SSG construction, or a sealant for working joints of window frames in buildings.

### EXAMPLES

Specific examples of the present invention will be described below together with comparative examples. The present invention is not limited to the examples.

In the synthesis examples below, the "number-average molecular weight" was calculated by GPC relative to polystyrene standards. For the (meth)acrylate polymer in Synthesis Example 1, the GPC column used was a polystyrene-crosslinked gel-packed column (Shodex GPC K-804, available from Showa Denko K.K.), and the GPC solvent used was chloroform. For the (meth)acrylate polymers in Synthesis Examples 2 to 6 and Comparative Synthesis Examples 7 to 10 and the polyoxyalkylene polymer in Synthesis Example 11, the solvent delivery system used was HLC-8120GPC available from Tosoh Corporation, the column used was a TSK-GEL H-type column from Tosoh Corporation, and the solvent used in the measurement was THF.

In the synthesis examples below, the "average number of silyl groups introduced per molecule of the polymer" was calculated based on concentration analysis by ¹H-NMR and the number-average molecular weight determined by GPC. The ¹H-NMR was measured at 23°C with ASX-400 available from Bruker using deuterated chloroform as a solvent.

### (Synthesis Example 1)

A 250 L-reactor was charged under nitrogen atmosphere with CuBr (1.09 kg), acetonitrile (11.4 kg), n-butyl acrylate (26.0 kg), and diethyl 2,5-dibromoadipate (2.28 kg) and they were stirred at 70 to 80°C for about 30 minutes. Then, pentamethyldiethylenetriamine was added thereto to start a reaction. After 30 minutes from the start of the reaction, n-butyl acrylate (104 kg) was continuously added over 2 hours. During the reaction, pentamethyldiethylenetriamine was appropriately added and the inner temperature was kept at 70 to 90°C. After 4 hours from the start of the reaction, volatile components were removed by heating and stirring at 80°C under reduced pressure. Acetonitrile (45.7 kg), 1,7-octadiene (14.0 kg), and pentamethyldiethylenetriamine (439 g) were added to the resulting reaction mixture and they were continuously stirred for 8 hours. The mixture was heated and stirred at 80°C under reduced pressure to remove volatile components.

Toluene was added to the resulting concentrate to dissolve the polymer, followed by addition of diatomite as a filter aid and aluminum silicate and hydrotalcite as adsorbents . Then the mixture was heated and stirred at an inner temperature of 100°C under oxygen-nitrogen mixed gas atmosphere (oxygen concentration 6%). Solids in the mixture were removed by filtration, and the filtrate was heated and stirred under reduced pressure at an inner temperature of 100°C to remove volatile components.

To the concentrate were further added aluminum silicate and hydrotalcite as adsorbents and a thermal degradation preventing agent, and the mixture was heated and stirred under reduced pressure (average temperature: about 175°C, degree of reduced pressure: 10 Torr or lower).

Aluminum silicate and hydrotalcite as adsorbents were further added, and an antioxidant was also added. The mixture was heated and stirred at an inner temperature of 150°C under oxygen-nitrogen mixed gas atmosphere (oxygen concentration 6%) .

Toluene was added to the resulting concentrate to dissolve the polymer, followed by removing solids in the mixture by filtration. The filtrate was heated and stirred under reduced pressure to remove volatile components, whereby an alkenyl group-containing polymer <P1> was obtained.

The alkenyl group-containing polymer <P1>, dimethoxymethylsilane (2.0 molar equivalents per alkenyl group), methyl orthoformate (1.0 molar equivalent per alkenyl group), and a platinum catalyst (xylene solution of bis(1,3-divinyl-1,1,3,3-tetramethyldisiloxane)-platinum complex catalyst; hereinafter, referred to as platinum catalyst) (10 mg, calculated as platinum, per kg of the polymer) were mixed, and then heated and stirred under nitrogen atmosphere at 100°C. After confirmation of disappearance of the alkenyl group, the reaction mixture was concentrated to give a dimethoxysilyl group-terminated poly(n-butyl acrylate) polymer [I-1]. The polymer [I-1] had a number-average molecular weight of 27000 and a molecular weight distribution of 1.3. The average number of silyl groups introduced per molecule of the polymer was determined by ¹H-NMR analysis and found to be about 1.8.

### (Synthesis Example 2)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a reactive silyl group-containing (meth)acrylate polymer [1-2]. The number-average molecular weight was 9000. The average number of silyl groups introduced per molecule of the polymer was determined by ¹H-NMR analysis and found to be about 1.7.

Methyl methacrylate: 46.5 parts by weight, n-Butyl acrylate: 28.6 parts by weight, Stearyl methacrylate: 20.1 parts by weight, γ-(Methacryloyloxypropyl)trimethoxysilane: 4.8 parts by weight, 2,2'-Azobis(2-methylbutyronitrile): 3.2 parts by weight

### (Synthesis Example 3)

An isobutanol solution of the monomer mixture described below was heated to 90°C. To the solution was dropwise added a 2,2'-azobis(2-methylbutyronitrile) solution as a polymerization initiator over 7 hours, followed by post-polymerization for 2 hours. Then, the solvent was evaporated to give a reactive silyl group-containing (meth)acrylate polymer [1-3]. The number-average molecular weight was 18400. The average number of silyl groups introduced per molecule of the polymer was determined by ¹H-NMR analysis and found to be about 1.9.

Methyl methacrylate: 10 parts by weight, n-Butyl acrylate: 77 . 6 parts by weight, Stearyl methacrylate: 10 parts by weight, γ-(Methacryloyloxypropyl)methyldimethoxysilane: 2.4 parts by weight, 2,2'-Azobis(2-methylbutyronitrile): 0.4 parts by weight

### (Synthesis Example 4)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a reactive silyl group-containing (meth)acrylate polymer [I-4]. The number-average molecular weight was 6600. The average number of silyl groups introduced per molecule of the polymer was determined by ¹H-NMR analysis and found to be about 1.2. The viscosity was measured with a BM viscometer and found to be 37000 cps.

n-Butyl acrylate: 65.5 parts by weight, 2-Ethylhexyl acrylate: 30 parts by weight, γ-(Methacryloyloxypropyl)trimethoxysilane: 4.5 parts by weight, 2,2'-Azobis(2-methylbutyronitrile): 1.7 parts by weight

### (Synthesis Example 5)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a reactive silyl group-containing (meth)acrylate polymer [I-5]. The number-average molecular weight was 4500. The average number of silyl groups introduced per molecule of the polymer was determined by ¹H-NMR analysis and found to be about 0.8. The viscosity was measured with a BM viscometer and found to be 62000 cps.

n-Butyl acrylate: 28.6 parts by weight, Ethyl acrylate: 4 6. 5 parts by weight, Stearyl methacrylate: 20 . 1 parts by weight, γ-(Methacryloyloxypropyl)trimethoxysilane: 4.8 parts by weight, 2,2'-Azobis(2-methylbutyronitrile): 3.2 parts by weight

### (Synthesis Example 6)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a reactive silyl group-containing (meth)acrylate polymer [I-6]. The number-average molecular weight was 5300. The average number of silyl groups introduced per molecule of the polymer was determined by ¹H-NMR analysis and found to be about 0.9. The viscosity was measured with a BM viscometer and found to be 24000 cps.

n-Butyl acrylate: 65.5 parts by weight, 2-Ethylhexyl acrylate: 30 parts by weight, γ-(Methacryloyloxypropyl)trimethoxysilane: 4.5 parts by weight, 2,2'-Azobis(2-methylbutyronitrile): 2.8 parts by weight

### (Comparative Synthesis Example 7)

An isobutanol solution of the monomer mixture described below was heated to 90°C. To the solution was dropwise added a 2,2'-azobis(2-methylbutyronitrile) solution as a polymerization initiator over 7 hours, followed by post-polymerization for 2 hours. Then, the solvent was evaporated to give a reactive silyl group-containing (meth)acrylate polymer [I-7]. The number-average molecular weight was 18000. The average number of silyl groups introduced per molecule of the polymer was determined by ¹H-NMR analysis and found to be about 0.9.

Methyl methacrylate: 10 parts by weight, n-Butyl acrylate: 78.8 parts by weight, Stearyl methacrylate: 10 parts by weight, γ-(Methacryloyloxypropyl)methyldimethoxysilane: 1.2 parts by weight, 2,2'-Azobis(2-methylbutyronitrile): 0.4 parts by weight

### (Comparative Synthesis Example 8)

An isobutanol solution of the monomer mixture described below was heated to 90°C. To the solution was dropwise added a 2,2'-azobis(2-methylbutyronitrile) solution as a polymerization initiator over 7 hours, followed by post-polymerization for 2 hours. Then, the solvent was evaporated to give a reactive silyl group-containing (meth)acrylate polymer [I-8]. The number-average molecular weight was 18000. The average number of silyl groups introduced per molecule of the polymer was determined by ¹H-NMR analysis and found to be about 3.9.

Methyl methacrylate: 10 parts by weight, n-Butyl acrylate: 75.2 parts by weight, Stearyl methacrylate: 10 parts by weight, γ-(Methacryloyloxypropyl)methyldimethoxysilane: 4.8 parts by weight, 2,2'-Azobis(2-methylbutyronitrile): 0.4 parts by weight

### (Comparative Synthesis Example 9)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a reactive silyl group-containing (meth)acrylate polymer [I-9]. The number-average molecular weight was 5200. The average number of silyl groups introduced per molecule of the polymer was determined by ¹H-NMR analysis and found to be about 1.8.

n-Butyl acrylate: 61 parts by weight, 2-Ethylhexyl acrylate: 30 parts by weight, γ-(Methacryloyloxypropyl)trimethoxysilane: 9 parts by weight, 2,2'-Azobis(2-methylbutyronitrile): 2.8 parts by weight

### (Comparative Synthesis Example 10)

An isobutanol solution of the monomer mixture described below was heated to 105°C. To the solution was dropwise added a 2,2'-azobis(2-methylbutyronitrile) solution as a polymerization initiator over 4 hours, followed by post-polymerization for 1 hour. Then, the solvent was evaporated to give a (meth)acrylate polymer [I-10]. The number-average molecular weight was 5500.

n-Butyl acrylate: 70 parts by weight, 2-Ethylhexyl acrylate: 30 parts by weight, 2,2'-Azobis(2-methylbutyronitrile): 2.8 parts by weight

### (Synthesis Example 11)

Propylene oxide was polymerized using a polyoxypropylene triol having a molecular weight of about 3000 as an initiator in the presence of a zinc hexacyanocobaltate glyme complex catalyst to give a polypropylene oxide having a number-average molecular weight of about 26000 (polystyrene-equivalent molecular weight as measured using a HLC-8120 GPC solvent delivery system available from Tosoh corporation, a TSK-GEL H type column available from Tosoh Corporation, and THF solvent). To the hydroxyl group-terminated polypropylene oxide was then added 1.2 equivalents of NaOMe in methanol per hydroxy group of the polypropylene oxide. The methanol was evaporated off, and 1.2 equivalents of allyl chloride was further added to replace each terminal hydroxy group to an allyl group. The unreacted allyl chloride was removed under reduced pressure. An amount of 100 parts by weight of the resulting crude allyl group-terminated polypropylene oxide was mixed and stirred with 300 parts by weight of n-hexane and 300 parts by weight of water, followed by removing water by centrifugation. The hexane solution obtained was further mixed and stirred with 300 parts by weight of water, and water was removed again by centrifugation, followed by removing the hexane under reduced pressure. In this manner, an allyl group-terminated trifunctional polypropylene oxide having a number-average molecular weight of about 26000 was obtained (this product is hereinafter referred to as polymer <P11>).

An amount of 100 parts by weight of the polymer <P11> was reacted with 1. 4 part by weight of methyldimethoxysilane at 90°C for 5 hours in the presence of 150 ppm of a platinum-vinylsiloxane complex (platinum content: 3% by weight) in isopropanol as a catalyst to give a methyldimethoxysilyl group-terminated polyoxypropylene polymer [II-1]. Further, analysis of silyl group introduction rate by ¹H-NMR revealed that the average number of terminal methyldimethoxysilyl groups per molecule was 2.3.

### (Examples 1 to 10, Comparative Examples 1 to 15)

A reactive silyl group-containing (meth) acrylate polymer, a reactive silyl group-containing polyoxyalkylene polymer, an inorganic filler, a plasticizer, different types of stabilizers, a silane coupling agent, a silanol condensation catalyst and the like in formulation amounts shown in Table 1 or 2 were weighed and then kneaded with a mixer under dehydrated conditions substantially free of moisture. Then, the mixture was sealed in a moisture-proof container (aluminum cartridge) to prepare a one-pack curable composition. The one pack compositions shown in Tables 1 and 2 were pushed out of the cartridges before use and evaluated as described below.

The formulation components shown in Tables 1 and 2 are listed below.

<Inorganic filler> WINNOFIL SPM (available from Solvay, colloidal calcium carbonate), Pluprowhite 3 (available from OMYA, surface-untreated ground calcium carbonate), Carbital 110S (available from IMERYS, surface-treated ground calcium carbonate), Ultra Pflex (available from Specialty Minerals, colloidal calcium carbonate), Q3T (available from Huber, surface-untreated ground calcium carbonate)
<Carbon black> Printex 30 (available from Evonik), Asahi #70 (available from Asahi Carbon Co., Ltd.)
<Air oxidation-curable substance> Tung oil
<Benzophenone> Benzophenone (available from Tokyo Chemical Industry Co., Ltd.)
<Plasticizer> SANSO CIZER DIDP (available from New Japan Chemical Co., Ltd., diisodecyl phthalate), ARUFON UP1020 (available from Toagosei Co., Ltd., non-functional acrylic polymer), DMA (available from Daihachi Chemical Industry Co., Ltd., dimethyl adipate)
<Photostabilizer> TINUVIN 770 (available from BASF), ADK STAB LA-63P (available from Adeka Corporation)
<Ultraviolet absorber> TINUVIN 326 (available from BASF)
<Antioxidant> IRGANOX 245 (available from BASF)
<Silane coupling agent> A-171 (available from Momentive Performance Materials Inc., vinyltrimethoxysilane), A-187 (available from Momentive Performance Materials Inc., γ-glycidoxypropyltrimethoxysilane), A-1120 (available from Momentive Performance Materials Inc., N-(β-aminoethyl)-γ-aminopropyltrimethoxysilane)
<Silanol condensation catalyst> NEOSTANN U-50 (available from Nitto Kasei Co., Ltd., tin (II) neodecanoate), VERSATIC 10 (available from Japan Epoxy Resin, neodecanoic acid), diethylaminopropylamine (available from Wako Pure Chemical Industries, Ltd.)
<Rheology-controlling agent> DISPARLON #6500 (available from Kusumoto Chemicals, Ltd.)

### (Initial adhesion)

The compositions shown in Tables 1 and 2 were each placed with a thickness of 3 mm on a glass adherend to prepare samples. The samples were cured at 23°C and 50% RH for 28 days, and then evaluated for adhesion by a 90 degree manual peel test. Tables 1 and 2 show the results. Samples with poor initial adhesion (interfacial failure) were not subjected to the subsequent evaluations.

### (Adhesion after weathering test)

The compositions shown in Tables 1 and 2 were each placed with a thickness of 3 mm on a glass adherend to prepare samples. The samples were cured at 23°C and 50% RH for 28 days, and then subj ected to a weathering test. The weathering test was carried out by putting the samples in UV2000 (available from ATLAS) equipped with a UVA 340 light source, followed by 1000 hours of UV irradiation (irradiance at 340 nm: 0.8 W/m²) on a surface opposing the surface to which the composition was adhered, at 60°C in a saturated water vapor atmosphere. After the weathering test, the samples were evaluated for adhesion by a 90 degree manual peel test. Tables 1 and 2 show the results. Samples with poor adhesion (interfacial failure) after the weathering test were not subjected to the subsequent evaluations.

### (Elongation properties of cured product)

The compositions shown in Tables 1 and 2 were cured at 23°C and 50% RH for 3 days and then at 50°C for 4 days to form sheets having a thickness of about 3 mm. Then No. 3 dumbbells were punched out of the sheets and subjected to a tensile test at a tensile rate of 200 mm/min to measure elongation at break (%). Tables 1 and 2 show the results. Samples with low elongation properties were not subjected to the subsequent evaluations.

### (Viscosity of curable composition)

The viscosity before curing of the compositions shown in Tables 1 and 2 was measured with a BS viscometer (available from Tokyo Keiki Inc., Roter: No. 7) at a rotational speed of 10 rpm at 23°C. Tables 1 and 2 show the results.

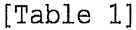

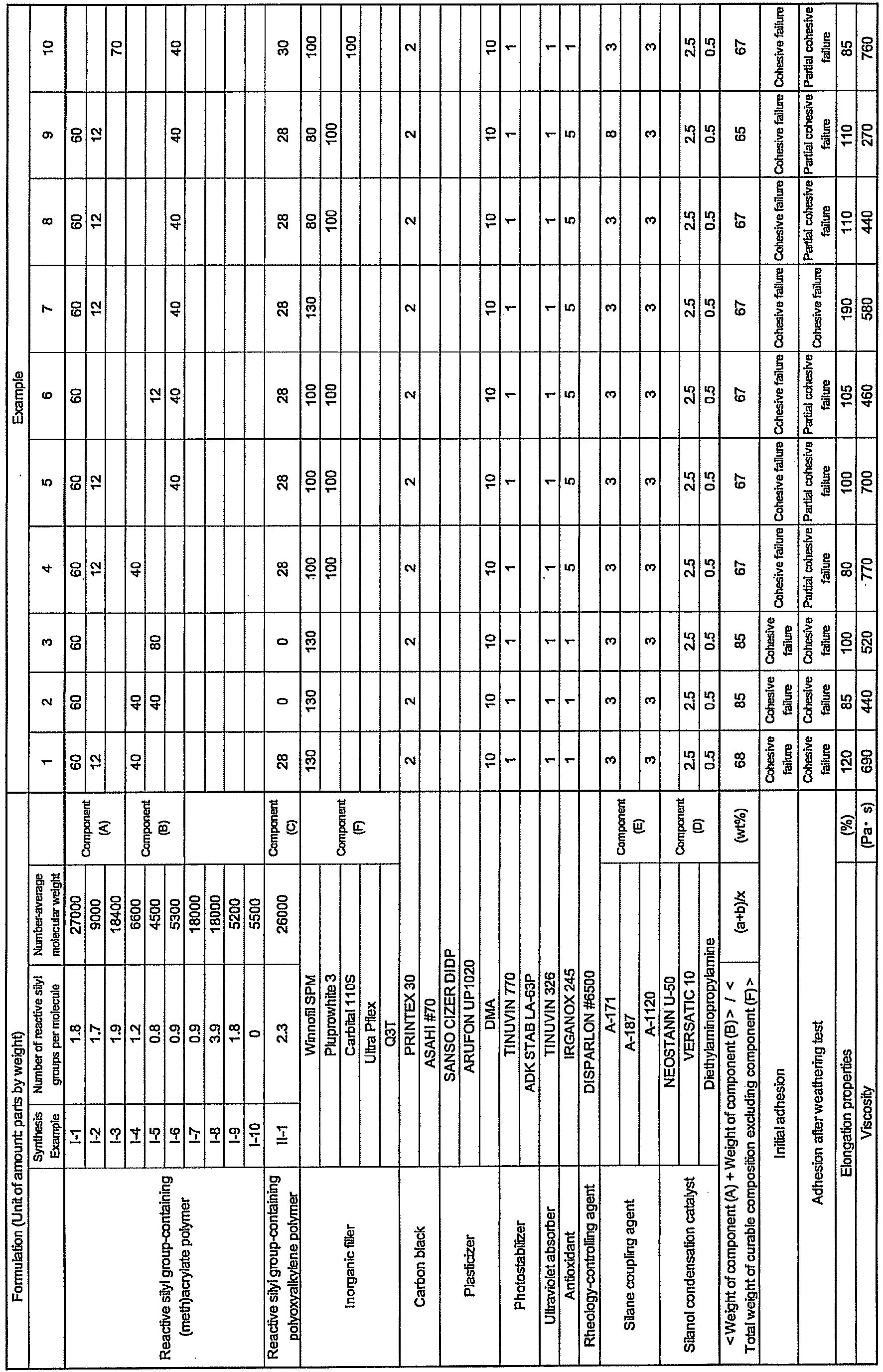

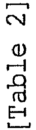

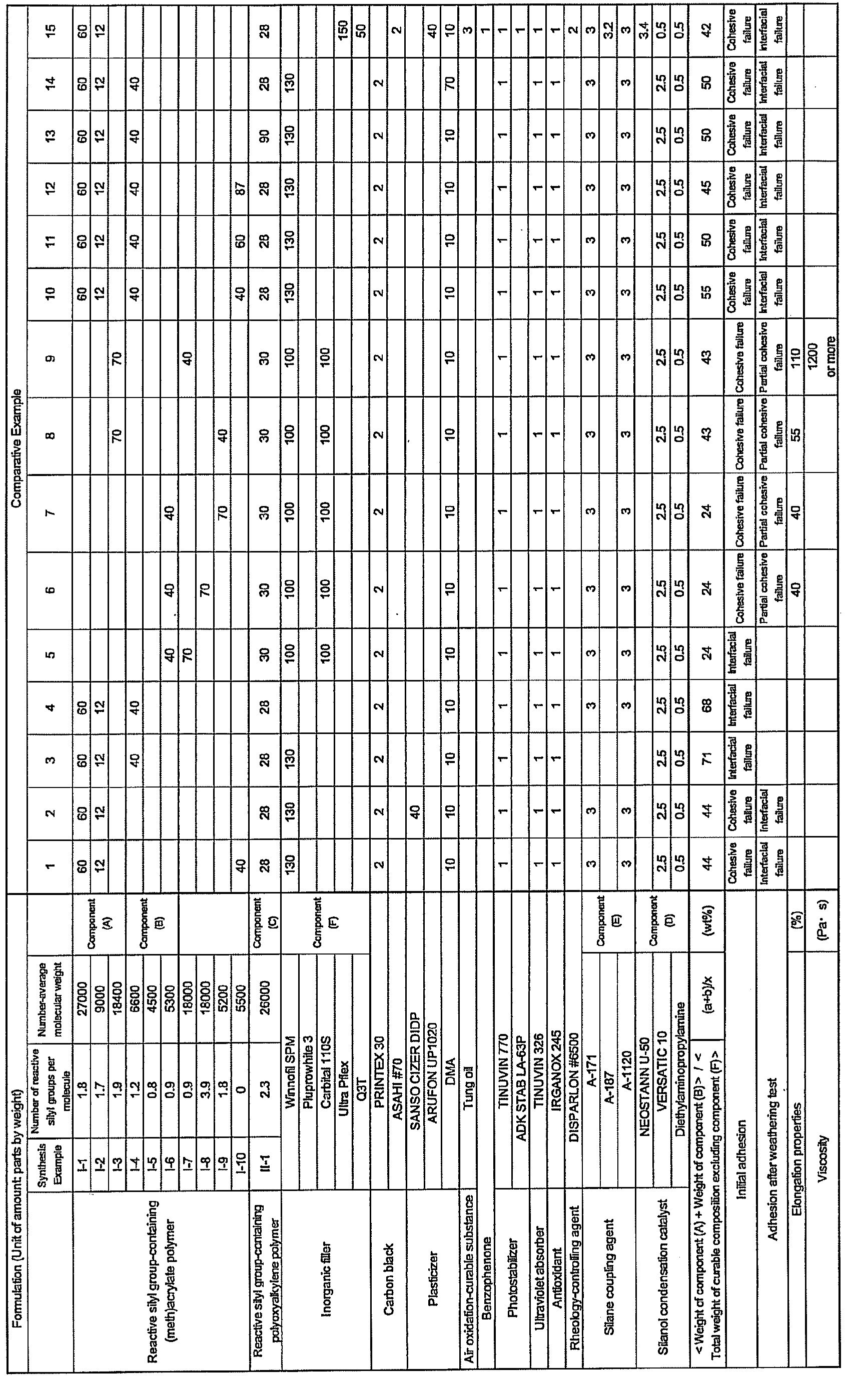

Tables 1 and 2 indicate that the curable compositions used in the present invention had low viscosities and excellent workability when they were uncured, while cured products thereof had good elongation properties. Further, structures including a light-transmitting member (I) and each of the cured products (II) were found to have excellent weather-resistant adhesion. In Comparative, Examples 10 to 14, curable compositions in which the ratio of a sum of the weight "a" of the component (A) and the weight "b" of the component (B) to the total weight "x" of the curable composition excluding the component (F), (a + b) /x, is 60% by weight or less were prepared using a (meth)acrylate polymer containing no reactive silyl group and/or a reactive silyl group-containing polyoxyalkylene polymer, the plasticizer DMA, and the like. The evaluation of these curable compositions revealed that all the compositions exhibited interfacial failure after the weathering test. The evaluation of the curable composition of Comparative Example 15 containing no component (B) (the techniques described in JP-A 2011-190394) demonstrated that the composition exhibited interfacial failure after the weathering test. In contrast, the curable compositions used in the present invention were found to have excellent weather-resistant adhesion in terms of light transmitted through glass.

## Claims

1. A structure, comprising:
a light-transmitting member,
a joint formed by the member, and
a cured product of a curable composition filling the joint,
the curable composition comprising the following components (A), (B), (D), (E), and (F):
(A) a (meth)acrylate polymer having a number-average molecular weight of at least 8000 but not more than 50000 and containing per molecule on average 1.0 to 3.5 silyl groups capable of crosslinking through formation of a siloxane bond;
(B) a (meth)acrylate polymer having a number-average molecular weight of at least 1000 but less than 8000 and containing per molecule on average 0.5 to 1.5 silyl groups capable of forming a siloxane bond;
(D) a silanol condensation catalyst;
(E) a silane coupling agent; and
(F) an inorganic filler,
a ratio of a sum of a weight "a" of the component (A) and a weight "b" of the component (B) to a total weight "x" of the curable composition excluding the component (F), (a + b)/x, being 60 to 99% by weight.

2. The structure according to claim 1,
wherein the light-transmitting member is glass.

3. The structure according to claim 1 or 2,
wherein the curable composition further comprises a component (C): a polyoxyalkylene polymer containing a silyl group capable of crosslinking through formation of a siloxane bond.

4. The structure according to claim 3,
wherein the component (C) comprises a polypropylene oxide backbone skeleton.

5. The structure according to claim 3 or 4,
wherein a ratio of a sum of the weight "a" of the component (A), the weight "b" of the component (B), and a weight "c" of the component (C) to the total weight "x" of the curable composition excluding the component (F), (a + b + c)/x, is 70 to 99% by weight.

6. The structure according to any one of claims 1 to 5,
wherein the silyl group in the component (A) and/or the silyl group in the component (B) is a group represented by the formula (1):
-SiR¹₃₋ₐXₐ (1)
wherein the (3-a) R¹s each independently represent a C1-C20 alkyl group, a C3-C8 cycloalkyl group, a C6-C20 aryl group, a C7-C20 aralkyl group, or a triorganosiloxy group represented by (R')₃SiO- wherein the R's each independently represent a C1-C20 substituted or unsubstituted hydrocarbon group; the a Xs each independently represent a hydroxy group or a hydrolyzable group; and a is 1, 2, or 3.

7. The structure according to claim 6,
wherein the silyl group in the component (A) is a silyl group of the formula (1) wherein a is 2.

8. The structure according to claim 6 or 7,
wherein the silyl group in the component (B) is a silyl group of the formula (1) wherein a is 3.

9. The structure according to any one of claims 1 to 8,
wherein the component (A) and/or the component (B) is a (meth) acrylate polymer containing at least 10% by weight of an acrylate monomer unit.

10. The structure according to any one of claims 1 to 9,
wherein the component (A) and/or the component (B) is a (meth)acrylate polymer containing at least 10% by weight of butyl acrylate monomer unit.

11. The structure according to any one of claims 1 to 10,
wherein the silyl group in the component (A) and/or the silyl group in the component (B) is present at an end of a side chain of the corresponding (meth)acrylate polymer.

12. The structure according to any one of claims 1 to 11,
wherein a ratio (a/b) between the weight "a" of the component (A) and the weight "b" of the component (B) is 1/2 to 4/1.

13. The structure according to any one of claims 1 to 12,
wherein the curable composition comprises the component (D) in an amount of 0.01 to 5 parts by weight per 100 parts by weight in total of the component (A) and the component (B).

14. The structure according to any one of claims 1 to 13,
wherein the curable composition comprises the component (E) in an amount of 0.1 to 20 parts by weight per 100 parts by weight in total of the component (A) and the component (B).

15. The structure according to any one of claims 1 to 14,
wherein the curable composition comprises the component (F) in an amount of 10 to 500 parts by weight per 100 parts by weight in total of the component (A) and the component (B).

16. The structure according to any one of claims 1 to 15,
wherein an amount of plasticizer is less than 30 parts by weight per 100 parts by weight in total of the component (A) and the component (B).

17. The structure according to any one of claims 1 to 16,
wherein an amount of solvent is less than 1 part by weight per 100 parts by weight in total of the component (A) and the component (B).

18. The structure according to any one of claims 1 to 17,
wherein the component (A) and/or the component (B) is a polymer obtained by solution polymerization.

19. The structure according to any one of claims 6 to 18,
wherein the component (A) and/or the component (B) is a polymer obtained by polymerization of a monomer mixture containing a (meth) acrylate monomer containing the silyl group of the formula (1).

## Patentansprüche

1. Struktur, umfassend:
ein lichtdurchlässiges Element,
eine durch das Element gebildete Verbindungsstelle und
ein gehärtetes Produkt aus einer härtbaren Zusammensetzung, die die Verbindungsstelle ausfüllt,
wobei die härtbare Zusammensetzung die folgenden Komponenten (A), (B), (D), (E) und (F) umfasst:
(A) ein (Meth)acrylatpolymer, das ein Zahlenmittel des Molekulargewichts von wenigstens 8.000 aber nicht mehr als 50.000 aufweist und das pro Molekül durchschnittlich 1,0 bis 3,5 Silylgruppen enthält, die durch Ausbildung einer Siloxanbindung quervernetzen können,
(B) ein (Meth)acrylatpolymer, das ein Zahlenmittel des Molekulargewichts von wenigstens 1.000 aber weniger als 8.000 aufweist und das pro Molekül durchschnittlich 0,5 bis 1,5 Silylgruppen enthält, die eine Siloxanbindung ausbilden können,
(D) einen Silanolkondensationskatalysator,
(E) ein Silankopplungsmittel und
(F) einen anorganischen Füllstoff,
wobei ein Verhältnis einer Summe eines Gewichts "a" der Komponente (A) und eines Gewichts "b" der Komponente (B) zu einem Gesamtgewicht "x" der härtbaren Zusammensetzung ohne die Komponente (F) (a + b) / x 60 bis 99 Gewichts-% beträgt.

2. Struktur nach Anspruch 1,
wobei das lichtdurchlässige Element Glas ist.

3. Struktur nach Anspruch 1 oder 2,
wobei die härtbare Zusammensetzung ferner eine Komponente (C) umfasst: ein Polyoxyalkylenpolymer, das eine Silylgruppe enthält, die durch Ausbildung einer Siloxanbindung quervernetzen kann.

4. Struktur nach Anspruch 3,
wobei die Komponente (C) ein Polypropylenoxid-Rückgratskelett umfasst.

5. Struktur nach Anspruch 3 oder 4,
wobei ein Verhältnis einer Summe des Gewichts "a" der Komponente (A), des Gewichts "b" der Komponente (B) und eines Gewichts "c" der Komponente (C) zum Gesamtgewicht "x" der härtbaren Zusammensetzung ohne die Komponente (F) (a + b + c) /x 70 bis 99 Gewichts-% beträgt.

6. Struktur nach einem der Ansprüche 1 bis 5,
wobei die Silylgruppe in der Komponente (A) und/oder die Silylgruppe in der Komponente (B) eine Gruppe ist, die durch die Formel (1) dargestellt wird:
-SiR¹₃₋ₐXₐ (1),
wobei die (3-a) R¹s jeweils unabhängig eine C1-C20-Alkylgruppe, eine C3-C8-Cycloalkylgruppe, eine C6-C20-Arylgruppe, eine C7-C20-Aralkylgruppe oder eine Triorganosiloxygruppe darstellen, die durch (R') ₃SiO- dargestellt wird, wobei die R's jeweils unabhängig eine C1-C20 substituierte oder unsubstituierte Kohlenwasserstoffgruppe darstellen, die a Xs jeweils unabhängig eine Hydroxygruppe oder eine hydrolysierbare Gruppe darstellen und a 1, 2 oder 3 ist.

7. Struktur nach Anspruch 6,
wobei die Silylgruppe in der Komponente (A) eine Silylgruppe der Formel (1) ist, wobei a 2 ist.

8. Struktur nach Anspruch 6 oder 7,
wobei die Silylgruppe in der Komponente (B) eine Silylgruppe der Formel (1) ist, wobei a 3 ist.

9. Struktur nach einem der Ansprüche 1 bis 8,
wobei die Komponente (A) und/oder die Komponente (B) ein (Meth)acrylatpolymer ist, das wenigstens 10 Gewichts-% einer Acrylatmonomereinheit enthält.

10. Struktur nach einem der Ansprüche 1 bis 9,
wobei die Komponente (A) und/oder die Komponente (B) ein (Meth)acrylatpolymer ist, das wenigstens 10 Gewichts-% einer Butylacrylatmonomereinheit enthält.

11. Struktur nach einem der Ansprüche 1 bis 10,
wobei die Silylgruppe in der Komponente (A) und/oder die Silylgruppe in der Komponente (B) an einem Ende einer Seitenkette des entsprechenden (Meth)acrylatpolymers vorhanden ist.

12. Struktur nach einem der Ansprüche 1 bis 11,
wobei ein Verhältnis (a/b) zwischen dem Gewicht "a" der Komponente (A) und dem Gewicht "b" der Komponente (B) 1/2 bis 4/1 beträgt.

13. Struktur nach einem der Ansprüche 1 bis 12,
wobei die härtbare Zusammensetzung die Komponente (D) in einer Menge von 0,01 bis 5 Gewichtsanteilen pro 100 Gewichtsanteilen der Summe der Komponente (A) und der Komponente (B) umfasst.

14. Struktur nach einem der Ansprüche 1 bis 13,
wobei die härtbare Zusammensetzung die Komponente (E) in einer Menge von 0,1 bis 20 Gewichtsanteilen pro 100 Gewichtsanteilen der Summe der Komponente (A) und der Komponente (B) umfasst.

15. Struktur nach einem der Ansprüche 1 bis 14,
wobei die härtbare Zusammensetzung die Komponente (F) in einer Menge von 10 bis 500 Gewichtsanteilen pro 100 Gewichtsanteilen der Summe der Komponente (A) und der Komponente (B) umfasst.

16. Struktur nach einem der Ansprüche 1 bis 15,
wobei ein Weichmachergehalt weniger als 30 Gewichtsanteile pro 100 Gewichtsanteilen der Summe der Komponente (A) und der Komponente (B) beträgt.

17. Struktur nach einem der Ansprüche 1 bis 16,
wobei ein Lösungsmittelgehalt weniger als 1 Gewichtsanteil pro 100 Gewichtsanteilen der Summe der Komponente (A) und der Komponente (B) beträgt.

18. Struktur nach einem der Ansprüche 1 bis 17,
wobei die Komponente (A) und/oder die Komponente (B) ein Polymer ist, das durch Lösungspolymerisation erhalten ist.

19. Struktur nach einem der Ansprüche 6 bis 18,
wobei die Komponente (A) und/oder die Komponente (B) ein Polymer ist, das durch Polymerisation einer Monomermischung erhalten ist, die ein (Meth)acrylatmonomer enthält, das die Silylgruppe der Formel (1) enthält.

## Revendications

1. Structure, comprenant :
un élément transmettant la lumière,
un joint formé par l'élément, et
un produit durci d'une composition durcissable remplissant le joint,
la composition durcissable comprenant les constituants (A), (B), (D), (E), et (F) suivants :
(A) un polymère de (méth)acrylate ayant une masse moléculaire moyenne en nombre d'au moins 8 000 mais d'au plus 50 000 et contenant par molécule en moyenne de 1,0 à 3,5 groupes silyle capables de réticulation par formation d'une liaison siloxane ;
(B) un polymère de (méth)acrylate ayant une masse moléculaire moyenne en nombre d'au moins 1 000 mais inférieure à 8 000 et contenant par molécule en moyenne de 0,5 à 1,5 groupes silyle capables de former une liaison siloxane ;
(D) un catalyseur de condensation de silanol ;
(E) un agent de couplage de silane ; et
(F) une charge inorganique,
un rapport d'une somme d'une masse "a" du constituant (A) et d'une masse "b" du constituant (B) à une masse totale "x" de la composition durcissable excluant le constituant (F), (a + b)/x, étant de 60 à 99 % en masse.

2. Structure selon la revendication 1,
dans laquelle l'élément transmettant la lumière est du verre.

3. Structure selon la revendication 1 ou 2,
dans laquelle la composition durcissable comprend de plus un constituant (C) : un polymère de polyoxyalkylène contenant un groupe silyle capable de réticulation par formation d'une liaison siloxane.

4. Structure selon la revendication 3,
dans laquelle le constituant (C) comprend un squelette d'ossature de poly(oxyde de propylène).

5. Structure selon la revendication 3 ou 4,
dans laquelle un rapport d'une somme de la masse "a" du constituant (A), de la masse "b" du constituant (B), et d'une masse "c" du constituant (C) à la masse totale "x" de la composition durcissable excluant le constituant (F), (a + b + c)/x, est de 70 à 99 % en masse.

6. Structure selon l'une quelconque des revendications 1 à 5,
dans laquelle le groupe silyle dans le constituant (A) et/ou le groupe silyle dans le constituant (B) est un groupe représenté par la formule (1) :
-SiR¹₃₋ₐXₐ (1)
dans laquelle les (3-a) R¹ représentent chacun indépendamment un groupe alkyle en C1-C20, un groupe cycloalkyle en C3-C8, un groupe aryle en C6-C20, un groupe aralkyle en C7-C20, ou un groupe triorganosiloxy représenté par (R')₃SiO- où les R' représentent chacun indépendamment un groupe hydrocarboné substitué ou non substitué en C1-C20 ; les a X représentent chacun indépendamment un groupe hydroxy ou un groupe hydrolysable ; et a est égal à 1, 2, ou 3.

7. Structure selon la revendication 6,
dans laquelle le groupe silyle dans le constituant (A) est un groupe silyle de la formule (1) dans laquelle a est égal à 2.

8. Structure selon la revendication 6 ou 7,
dans laquelle le groupe silyle dans le constituant (B) est un groupe silyle de la formule (1) dans laquelle a est égal à 3.

9. Structure selon l'une quelconque des revendications 1 à 8,
dans laquelle le constituant (A) et/ou le constituant (B) est un polymère de (méth)acrylate contenant au moins 10 % en masse d'une unité monomère d'acrylate.

10. Structure selon l'une quelconque des revendications 1 à 9,
dans laquelle le constituant (A) et/ou le constituant (B) est un polymère de (méth)acrylate contenant au moins 10 % en masse d'unité monomère d'acrylate de butyle.

11. Structure selon l'une quelconque des revendications 1 à 10,
dans laquelle le groupe silyle dans le constituant (A) et/ou le groupe silyle dans le constituant (B) est présent à une extrémité d'une chaine latérale du polymère de (méth)acrylate correspondant.

12. Structure selon l'une quelconque des revendications 1 à 11,
dans laquelle un rapport (a/b) entre la masse "a" du constituant (A) et la masse "b" du constituant (B) est de 1/2 à 4/1.

13. Structure selon l'une quelconque des revendications 1 à 12,
dans laquelle la composition durcissable comprend le constituant (D) dans une quantité de 0,01 à 5 parties en masse pour 100 parties en masse au total du constituant (A) et du constituant (B).

14. Structure selon l'une quelconque des revendications 1 à 13,
dans laquelle la composition durcissable comprend le constituant (E) dans une quantité de 0,1 à 20 parties en masse pour 100 parties en masse au total du constituant (A) et du constituant (B).

15. Structure selon l'une quelconque des revendications 1 à 14,
dans laquelle la composition durcissable comprend le constituant (F) dans une quantité de 10 à 500 parties en masse pour 100 parties en masse au total du constituant (A) et du constituant (B).

16. Structure selon l'une quelconque des revendications 1 à 15,
dans laquelle une quantité de plastifiant est inférieure à 30 parties en masse pour 100 parties en masse au total du constituant (A) et du constituant (B).

17. Structure selon l'une quelconque des revendications 1 à 16,
dans laquelle une quantité de solvant est inférieure à 1 partie en masse pour 100 parties en masse au total du constituant (A) et du constituant (B).

18. Structure selon l'une quelconque des revendications 1 à 17,
dans laquelle le constituant (A) et/ou le constituant (B) est un polymère obtenu par polymérisation en solution.

19. Structure selon l'une quelconque des revendications 6 à 18,
dans laquelle le constituant (A) et/ou le constituant (B) est un polymère obtenu par polymérisation d'un mélange monomère contenant un monomère de (méth)acrylate contenant le groupe silyle de la formule (1).
